# EUROPÄISCHE PATENTSCHRIFT

(11) **EP 0 518 963 B1**
(45) Veröffentlichungstag und Bekanntmachung des Hinweises auf die Patenterteilung: **09.11.1994**
(21) Anmeldenummer: 91905876.8
(22) Anmeldetag: 04.03.1991
(51) Int. Cl.: A01G 9/10

(54) **SPEICHERVORRICHTUNG FÜR FLÜSSIGKEITEN, INSBESONDERE FÜR WASSER**
DEVICE FOR STORING LIQUIDS, IN PARTICULAR WATER
RESERVE POUR LIQUIDES, EN PARTICULIER POUR L'EAU

(30) Priorität: 09.03.1990 AT 560/90
(43) Veröffentlichungstag der Anmeldung: 23.12.1992
(73) Patentinhaber: HUBACEK, Hugo, Prof. Dr., A-1080 Wien (AT)
(72) Erfinder: HUBACEK, Hugo, Prof. Dr., A-1080 Wien (AT); DENK, Johann, A-1040 Wien (AT)
(74) Vertreter: Secklehner, Günter, Dr.
(86) Internationale Anmeldenummer: AT9100037
(87) Internationale Veröffentlichungsnummer: WO9113541

(56) Entgegenhaltungen:
- EP-A- 0 117 766
- EP-A- 0 260 106
- DE-A- 2 737 941
- GB-A- 1 376 091
- GB-A- 1 399 822
- GB-A- 2 024 190
- US-A- 3 899 850
- US-A- 3 973 355
- US-A- 4 665 647

## Beschreibung

Die Erfindung betrifft eine Speichervorrichtung für Flüssigkeiten, insbesondere Wasser, wie sie im Oberbegriff des Patentanspruches 1 beschrieben ist.

Aus der US-A-3,973,355 ist es bekannt, ein Trägermaterial mit einem Feuchtigkeitsabsorber, nämlich einem Hydrogel zu überziehen. Nachteilig ist bei dieser Lösung, daß, um eine ausreichende Anhaftung des Feuchtigkeitsabsorbers an den Trägermaterialien zu erreichen, diese unter hohem Druck zu trocknen sind. Durch die Trocknung unter hohem Druck kommt es zu einer hohen Verdichtung der Trägermaterialien, wodurch das Entstehen von Lufträumen im Trägermaterial verringert wird, sodaß die Luftzufuhr durch derartige Bauteile hindurch, z.B. in den Wurzelbereich von Pflanzen erschwert oder teilweise überhaupt verhindert wird. Dazu kommt, daß für die Herstellung von formbeständigen Baukörpern, zur Erzielung einer Haftung zwischen den einzelnen Trägermaterialien zusätzlich ein Kleber beizumengen ist, der vor allem dann, wenn dieses mit dem Feuchtigkeitsabsorber überzogene Trägermaterial im Bereich von Pflanzen eingesetzt wird, das Pflanzwachstum negativ beeinflussen kann.

Aus der DE-A-27 37 941 sind verschiedene Typen von Hydrogelen bekannt. Weiters ist bekannt, daß die direkte Einmischung von Hydrogelen in die Erde Probleme schafft, da es zu einem Agglomerieren, also einer Zusammenballung der Erde kommt. Um dies zu verhindern, soll als Überzugsmittel über die Hydrogelteilchen hydrophobe Überzugsteilchen verwendet werden. Bei diesen hydrophoben Überzugsteilchen handelt es sich um Materialien, welche auf der Wasseroberfläche schwimmen. Durch die damit erzielte wasserabstoßende Wirkung soll nämlich die rauhe Absorption der Bodenfeuchtigkeit, die üblicher Weise zu einer Klumpenbildung führt, verhindert werden. Nachteilig ist bei dieser Ausführungsform, daß die Haftung dieser hydrophoben Stoffe an den Hydrogelen nicht ausreicht, und daß zuerst diese Überzugsschicht über den Hydrogelen entfernt werden muß, sodaß diese wirksam werden.

Es ist bereits bekannt - gemäß US-A-3,981,100 - flüssigkeitsaufnehmende Verbindungen zu schaffen, die wasserunlösliche Alkalisalze eines vernetzten Polymerisats auf Polyamidbasis enthalten. Derartige Feuchtigkeitsabsorber werden vor allem in der Medizintechnik, sowie in der Hygienetechnik, beispielsweise für wasseraufsaugende Windeln, bzw. Binden und dgl., sowie als Brustersatz und -vergrößerung, Desinfektionsmitteln und dgl. eingesetzt.

Weiters ist es in der Agrarchemie bei Schädlingsbekämpfungsmittel bekannt, als Suspensionshilfen makromolekulare zelluloseähnliche Kettenmoleküle mit Seitenketten bestehend aus Mannose und Glucuronsäure einzusetzen, um wahrend des Sprühvorganges ein Abdriften der Wirkstoffe möglichst zu verhindern.

Andererseits ist es auch bereits bekannt, zur Wasserhaltung in sandigen Böden dem Erdboden im Pflanzbereich derartige Feuchtigkeitsabsorber, beispielsweise hydrophile Acrylamidopolymere zuzumischen, um das Absinken des Wassers in einen unterhalb der Wurzeln liegenden tieferen Bereich zu verhindern. Dadurch ist es zwar über einen kurzen Zeitraum gelungen, das sofortige Absinken des Wassers aus den Wurzelbereichen in tiefere Schichten zu vermeiden, über längere Zeiträume konnte jedoch kein den Kosten für dieses Verfahren entsprechendes Ergebnis erzielt werden.

Der vorliegenden Erfindung liegt daher die Aufgabe zugrunde, eine Speichervorrichtung für Feuchtigkeiten, insbesondere Wasser und bzw. oder Nährstoffe und bzw. oder Pflanzenschutzmittel zu schaffen, die auch über lange Zeiträume eine gleichmäßige Feuchtigkeitshaltung und -abgabe ermöglicht. Darüber hinaus soll auch eine langzeitige Nährstoffspeicherung, Nährstoffabgabe, sowie Bevorratung an Pflanzenschutzmittel erreichbar sein.

Diese Aufgabe der Erfindung wird durch die Merkmale im Kennzeichenteil des Patentanspruches 1 gelöst. Der überraschende Vorteil dieser Lösung liegt darin, daß der Feuchtigkeitsabsorber auf einem Trägermaterial in mehr oder weniger dünner Schicht aufgebracht werden kann. Dieses Trägermaterial stellt auch über lange Zeiträume sicher, daß eine gewünschte Lage der Feuchtigkeitsabsorber im Wirkungsbereich derselben beibehalten werden kann. Auch durch oftmaliges Zuführen von Feuchtigkeit, insbesondere im Pflanzenbereich, wird dadurch ein Auswaschen der Feuchtigkeitsabsorber sowie gegebenenfalls der Nährstoffe bzw. der Pflanzenschutzmittel verhindert.

Dazu kommt, daß der Feuchtigkeitsabsorber durch eine gute Benetzungsfähigkeit und durch die auf dem Trägermaterial dabei auftretenden Van der Waalschen-Oberflächenkräfte gut haftet und außerdem das Trägermaterial untereinander zusammenhält, wodurch eine Lagefixierung gegenüber den konstant mit Feuchtigkeit zu versorgenden Teilen, insbesondere Wurzeln von Pflanzen noch zusätzlich erhöht werden kann. Durch diese Lösung wird aber weiters ermöglicht, daß das Speichervolumen der durch das Trägermaterial gebildeten Speicherschicht, mehr Feuchtigkeit, insbesondere Wasser, aufnehmen und speichern kann, als dies auf Grund der üblicherweise vorhandenen Absorptionskräfte möglich wäre. Das Trägermaterial bewirkt darüber hinaus durch seine Van der Waalschen-Oberflächenkräfte eine geringere Verdunstungsgeschwindigkeit des Wassers als dem eigentlichen Feuchtigkeitsabsorber allein entsprechen würde. Von Vorteil ist weiters auch, daß durch die gleichmäßige Verteilung des Gemisches über die Oberfläche der Trägermaterialien, die Flüssigkeit bzw. das Wasser gleichmäßig über das gesamte Volumen der Speicherschicht verteilt werden kann. Die Van der Waalschen-Kräfte werden besonders stark wirksam zwischen sehr großen und polaren Molekülen, wie denen des Feuchtigkeitsabsorbers und der großen Trägermaterialoberfläche, beispielsweise von gemahlenen Mineralien bzw. silikatischen Stoffen wie z.B. Gesteinsmehlen oder Zement. Die Van der Waalschen-Kräfte können dabei chemische Bindungskräfte übertreffen. Die Absorptionsfähigkeit des Feuchtigkeitsabsorbers gegenüber Wasser bleibt daher im wesentlichen erhalten, obgleich allgemein mit steigender Elektrolytkonzentration gegenüber Wasser die Absorptionsfähigkeit der Feuchtigkeitsabsorber sinkt. Durch die hohe Feuchtigkeitsabsorptionsfähigkeit des Feuchtigkeitsabsorbers, der als Speichervorrichtung wirkt, erhält die Pflanze im Freien bereits durch den Tau oder durch hohe Luftfeuchtigkeit eine wesentliche Wasserzufuhr, wodurch besonders das Anwachsen, z.B. von Jungbäumen, in alpinen Regionen begünstigt wird. Durch die hohen wasserhaltenden Kräfte der Speichervorrichtung wird andererseits die Verdunstung des Wassers wesentlich verringert. Darüber hinaus ist die Speichervorrichtung zur Vermehrung von Stecklingen geeignet.

Vorteilhaft ist es aber auch, einen neuen Boden in möglichst konzentrierter Form - kleines Volumen, wenig Gewicht - zu schaffen, der von den Umweltgiften, Schädlingen, Krankheitserregern und Unkräutern unbelastet ist und der den langzeitigen Aufbau eines neuen Humus fördert. Die Aufgabe der Erfindung wird durch die gleichzeitige Verwendung von anorganischen und organischen Rohstoffen auch ohne Beigabe von Humus gelöst.

Die anorganischen Substanzen werden dabei über lange Zeiträume durch die Säuren, welche von den Mikroorganismen im organischen Rohstoff gebildet und ausgeschieden werden, abgebaut und dienen ihrerseits wieder als mineralische Nährstoffe. Durch das Absterben der Mikroorganismen werden organische Nährstoffe freigesetzt.

Reinnährstoff-Düngungen sind üblicherweise einseitig auf die Ernährung der Pflanzen ausgerichtet. Sie lassen kein oder kaum ein Wechselspiel zwischen anorganischen Bodenbestandteilen einerseits und lebender Bodenflora bzw. Bodenfauna andererseits entstehen. Das natürliche und lebenswichtige ökologische Gleichgewicht kann nur mit einer Symbiose zwischen anorganischen und organischen Substanzen erreicht werden.

Alle Bodenorganismen leben von den stoffwechselmäßig umsetzbaren organischen Substanzen im Boden. Sie sind gleichzeitig von der geeigneten Wasserversorgung, der Bodendurchlüftung, dem pH-Wert und der Temperatur, aber auch von der Versorgung mit allen erforderlichen Mineralstoffen wie Stickstoff, Phosphor, Kalium, Magnesium etc. abhängig. Organische und mineralische Düngung ist nicht nur für die Pflanzenproduktion im Boden, sondern auch für die Mikroorganismen von lebenswichtiger Bedeutung. Mikrobielle Untersuchungen zeigten, daß sowohl die qualitative Entwicklung bestimmter Mikroorganismen-Arten als auch die quantitative Wachstumsgeschwindigkeit besonders in ihrer Initialphase stark zunimmt. Der allmähliche Aufbau einer natürlichen Humusschicht wird dadurch mit der Speichervorrichtung möglich und wird durch abgestorbene Pflanzenteile wie z.B. Wurzeln weiter verstärkt.

Eine weitere vorteilhafte Ausgestaltung beschreibt Patentanspruch 2. Anorganische Materialien haben hohe mechanische Festigkeiten und gute Beständigkeiten, weswegen sie sich als ausgezeichnetes Trägermaterial für den Feuchtigkeitsabsorber eignen. Sie besitzen zum Teil auch eine hohe Porosität. Dadurch kann das Trägermaterial gleichzeitig zum Feuchtigkeitsabsorber werden. Anorganische Materialien natürlichen Ursprungs besitzen ein breites Angebot an Nährstoffen und Spurenelementen für Pflanzen, weswegen sie gleichzeitig auch als langzeitig wirkender, schwer wasserlöslicher Düngemittelspeicher wirken. Die porösen anorganischen Materialien haben auch ein niedriges Raumgewicht, weswegen sie als Trägermaterial für Dachgartenbegrünungen, leichte Pflanzerde und dgl. geeignet sind. Das anorganische Trägermaterial vermindert die Verdunstungsgeschwindigkeit von Wasser aus dem mit Wasser vermischten Feuchtigkeitsabsorber.

Weiters ist aber auch eine Ausführungsform nach Patentanspruch 3 möglich. Dabei können organische Materialien die verschiedensten Eigenschaften besitzen. Ihre Beständigkeit gegenüber anorganischen Materialien ist meist geringer, weswegen sie schneller im Boden zersetzt werden und damit ein schneller wirksam werdendes organisches Düngemittel sind. Viele organische Materialien, wie beispielsweise Torf, Zellulosefasern, Polyurethanschäume, Holzspäne können auf Grund ihrer Porosität zusätzlich zu ihrer Trägerfunktion als Feuchtigkeitsabsorber wirken. Viele organische Materialien, wie beispielsweise verschiedene Trester haben neben ihrer Trägerfunktion auch eine starke Düngemittelwirkung. Die faserförmigen organischen Materialien bringen neben ihrer Trägerwirkung noch eine armierende Wirkung beim Einbau der erfindungsgemäßen Speichervorrichtung besonders auf schrägen Flächen oder für besondere Formgestaltungen mit.

Eine weitere Ausführungsform ist nach Patentanspruch 4 vorgesehen, wodurch erreicht wird, daß Oberflächen von stabilen Tragkörpern, wie beispielsweise Schotter, Splitt, Lecca, Steinwollfasern, Bimskies, Perlit, Vermiculite, Liapor, Bentonit und Steine, ein festes zusammenhaltendes Materialvolumen bilden, in welchem die Pflanzen oder Gräser durch die langzeitige Speicherwirkung und gute Durchlüftung besonders gedeihen. Dadurch ist es auch möglich, künstliche Pflanzenerde zu schaffen, die von den Belastungen der Bodenüberdüngung, z.B. der Überbeanspruchung durch die intensive Bodennutzung, nicht geschädigt sind. Vor allem kann man damit für die Aufzucht von Neupflanzen, wie dies beispielsweise bei den Waldaufforstungen auch in alpinen Lagen der Fall ist, in Bereichen, in welchen die Böden durch Bodenerosion, sowie mangelnde Düngerzufuhr und den sauren Regen geschädigt sind, die Pflanze mit ihrer eigenen Speichervorrichtung in einem Container zuliefern. Die Speichervorrichtung ermöglicht für die ersten 1 bis 2 Jahre eine ausreichende Wasserhaltung neben einer gewissen Nährstoffversorgung. Bei der Auspflanzung hat die Pflanzenerde, aus der Speichervorrichtung bestehend, einen derart stabilen Körper, daß der Container nicht mit in die Erde, sondern lediglich die fest zusammenpackende Speichervorrichtung mit der darin verwurzelnden Pflanze, z.B. einem Jungbaum, versetzt werden braucht. Durch die relativ große Korngröße des Splittes kann durch die mit dem Trägermaterial vermischten Feuchtigkeitsabsorber in diesen Hohlräumen auch ausreichend Flüssigkeit gespeichert werden, die dann je nach dem Bedarf der Pflanze an diese abgegeben wird. Ein weiterer Vorteil der größeren Korngrößen liegt darin, daß eine ausreichende Durchlüftung der Wurzeln von in einer derartigen Pflanzenerde eingesetzten Pflanze und damit eine ausreichende Sauerstoffzufuhr zu den Wurzeln gewährleistet ist. Weiters wird verhindert, daß sich das Trägermaterial bei der Zufuhr von Feuchtigkeit immer weiter verdichten kann oder sich Moos, Pilze bzw. übermäßiges Unkraut an der Oberfläche bilden. Der Feuchtigkeitsgehalt nimmt pflanzenphysiologisch richtig von Innen nach Außen ab. Die Jungpflanzen, z.B. Bäumchen, verankern sich in der Pflanzenerde derart fest, daß sie nach Auspflanzung und auch nach starken Regengüssen noch immer windfest verankert sind.

Von Vorteil ist aber auch eine Weiterbildung nach Patentanspruch 5, da die mineralischen Stoffe, insbesondere die Silikate gleichzeitig zur Bodenverbesserung bzw. Düngung herangezogen werden können. Bestimmte Silikate sind quellfähig, d.h. daß durch den mikrobiellen Abbau Kieselsäure pflanzenverfügbar entsteht. Die gelöste Kieselsäure ist durch ihren Verklebungseffekt von Tonteilchen darüberhinaus für eine gute Krümelbildung und damit eine hohe Luftkapazität verantwortlich. An den Phasengrenzflächen solcher quellfähiger Silikate entsteht durch eine besondere molekulare Orientierung der dipolartigen Wassermoleküle eine höhere Acidität, welche den Säure-Basen-Haushalt im Boden puffert und gleichzeitig die Sorptionsfähigkeit gegenüber Kationen erhöht.

Eine andere Weiterbildung ist gemäß Patentanspruch 6 vorgesehen, wodurch es möglich ist, künstliche Pflanzerden zu schaffen, die von den Belastungen der Bodenüberdüngung bzw. der Überbeanspruchung durch die intensive Bodennutzung nicht geschädigt sind. Vor allem kann damit für die Aufzucht von Neupflanzen, wie dies beispielsweise bei Waldaufforstungen der Fall ist, in Bereichen in welchen die Böden durch Bodenerosion, sowie mangelnden Düngerzufuhr und den sauren Regen geschädigt sind, die Pflanze mit einem Pflanzerdencontainer geliefert werden, der für die ersten ein bis zwei Jahre eine ausreichende Wasserhaltung neben einer gezielten Nährstoffversorgung ermöglicht. Durch die relativ große Korngröße des Splitts kann durch die mit dem Trägermaterial vermischten Feuchtigkeitsabsorber in diesen Hohlräumen auch ausreichend Flüssigkeit zurückgehalten werden, die dann je nach dem Bedarf der Pflanze an diese abgegeben wird. Ein weiterer Vorteil der größeren Korngrößen liegt darin, daß eine ausreichende Durchlüftung der Wurzeln von in einer derartigen Pflanzerde eingesetzten Pflanzen und damit eine ausreichende Sauerstoffzufuhr zu den Wurzeln gewährleistet ist. Weiters wird durch scharfkantigen Splitt, dessen einzelne Teilchen sich gegeneinander verspießen und damit nicht zusammenrutschen und keine dichte Packung bilden können, verhindert, daß sich das Trägermaterial bei der Zufuhr von Feuchtigkeit immer weiter verdichten kann.

Vorteilhaft ist es aber auch die Lösung nach Patentanspruch 7, da sich derartige Trägermaterialien vor allem für rasch wachsende Küchenpflanzen, wie Schnittlauch, Kresse und dgl. aber auch Gras eignen. Durch das feinkörnige Material (Mehl) entsteht eine sehr große Oberfläche, die ihrerseits wieder mit einem Gemisch aus Flüssigkeitsabsorber und Trägermaterial beschichtet werden kann, zur Verfügung. Damit wird auch ein noch größeres Wasserspeichervolumen geschaffen, das in der Lage ist eine noch größere Menge an Flüssigkeit, insbesondere an Wasser, zu speichern. Außerdem wird durch die große Oberfläche ein guter Übergang der Feuchtigkeit auf die Vielzahl der feinen Wurzeln bei kleinen Pflanzen, insbesondere Heilpflanzen oder Gräser erreicht.

Eine weitere Ausführungsvariante ist nach Patentanspruch 8 vorgesehen. Vorteilhaft ist dabei auch, wenn das Düngemittel durch ein Pulver aus zumindest einem mineralischen Stoff, insbesondere Silikaten und einem mineralischen Stoffgemisch, insbesondere Silikatgemisch gebildet ist. Durch die dem Trägermaterial bzw. Gemisch einzeln oder in gemischter Form zugemischten Dünger in Form von Nährstoffe und Spurenelemente enthaltenden, schwer wasserlöslichen silikatischen Verbindungen kommt es zu einer Art von chemischen Reaktion zwischen dem Feuchtigkeitsabsorber und dem Dünger, die eine Haftung der einzelnen Trägermaterialien untereinander ermöglicht. Das wird dadurch bewirkt, daß die großen polaren Moleküle des Feuchtigkeitsabsorbers starke Van der Waalsche-Kräfte besitzen, welche bewirken, daß chemische Bindungskräfte zwischen den einzelnen Materialien des Speicherelementes auftreten. Je nach Zusammensetzung des mineralischen Stoffes bzw. silikatischen Stoffgemisches ist eine spezifische Düngung bestimmter Pflanzenarten möglich. Diese silikatischen Verbindungen sind auch schwer wasserlöslich, liefern daher ihre Nährstoffe über lange Zeit an die Pflanzen und können das Grundwasser oder den Boden nicht durch ihre Ausschwemmung belasten.

Von Vorteil ist aber auch eine Ausgestaltung nach Patentanspruch 9. Das Steinmehl ist ein langzeitig wirken der Nährstofflieferant für die Pflanzen und kann durch Wasser nicht in das Grundwasser ausgewaschen werden. Die Geschwindigkeit der Nährstoffabgabe kann durch die Mahlfeinheit gesteuert werden: Je kleiner der Korndurchmesser, desto schneller erfolgt die Nährstoffabgabe. Durch einen höheren Anteil ferro- oder ferrimagnetischer Stoffe bzw. stärker paramagnetischer Stoffe, welche ein höheres magnetisches Moment besitzen, wie beispielsweise Chrom-, Nickel-, Kobald- oder Aluminiumverbindungen der Steinmehle begünstigen, wie die Versuche in der Praxis gezeigt haben, das Wachstum der Pflanzen.

Es ist aber auch eine Ausführung nach Patentanspruch 10 möglich, wodurch ein gutes Bodenklima für die Aufzucht von Neupflanzen geschaffen werden kann.

Weiters ist aber auch die Ausbildung nach Patentanspruch 11 möglich, wodurch mit der Abgabe der Flüssigkeit jeweils auch Teile der Spurenelemente den Pflanzen zugeführt werden können. Wird mehr Flüssigkeit von den Pflanzen benötigt, so werden mehr Spurenelemente zugeführt und bei einem geringerem Wasserverbrauch geringere Mengen. Dadurch erfolgt eine Abstimmung der an die Pflanzen weitergegebenen Spurenelemente in Abhängigkeit von deren Wasserverbrauch.

Vorteilhaft ist es aber auch nach Patentanspruch 12 vorzugehen, da es auf Grund der hohen Absorptionskräfte des pulverförmigen Speicherelementes möglich ist, Düngemittel auch in flüssiger Form derart zu binden, daß diese in ihrer flüssigen Phase nicht mehr erkennbar sind.

Vorteilhaft ist aber auch die Ausführung nach Patentanspruch 15, da dadurch der Aufbau, vergleichbar mit chemischen Bindungen, erleichtert und unterstützt bzw. ausgelöst werden kann.

Weiters ist aber auch eine Ausbildung nach Patentanspruch 16 möglich. Damit ist eine negative Auswirkung auf über eine derartige Speichervorrichtung mit Feuchtigkeit versorgte Pflanzen, ausgeschaltet. Die Langzeitwirkung eines derartigen Feuchtigkeitsabsorbers geht über viele Jahre, da dieses organo-synthetische Material kaum mikrobiell oder andersartig zersetzt wird.

Vorteilhaft ist aber auch Patentanspruch 17, da dadurch der Aufbau, vergleichbar mit chemischen Bindungen, erleichtert und unterstützt bzw. ausgelöst werden kann.

Eine andere Ausführungsvariante ist gemäß Patentanspruch 18 vorgesehen. Dadurch wird die langzeitige Speicherung einer ausreichenden Menge von Feuchtigkeit für einen Wurzelbereich der Pflanze mit den Vorteilen einer ausreichenden und gleichmäßigen mineralischen und bzw. oder organischen Düngerversorgung verbunden. Gleichzeitig ist sichergestellt, daß eine ausreichende Durchlüftung eines derartigen als künstliches Pflanzmaterial verwendeten Materials, eine ausreichende Sauerstoffzufuhr zu den Wurzeln sicherstellt und toxische Einflüsse durch kontaminierte Erden und Böden nicht mehr auftreten können. Dies ist vor allem für die Produktion von Heilpflanzen und Kräutern von Vorteil. Wesentlich für die pflanzenphysiologische Wirkungsweise ist dabei auch die hohe Ionentauscherkapazität des Feuchtigkeitsabsorbers, die besonders für salzartige Absorber gilt. Diese Ionentauschkapazität wird durch die Verwendung bestimmter Gesteinsmehle verstärkt.

Durch die Ausbildung nach Patentanspruch 19 wird eine lange Lebensdauer des Feuchtigkeitsabsorbers auch bei oftmaligen Wechsel zwischen amorphen und teilkristallinen Zustand erreicht.

Weiters ist auch eine Ausgestaltung nach Patentanspruch 20 möglich. Damit wird eine Überfüllung des Pflanzmaterials mit Wasser bzw. Feuchtigkeit zuverlässig verhindert. Der am Trägermaterial anhaftende Feuchtigkeitsabsorber nimmt nämlich beim Eindringen von Feuchtigkeit so viel Feuchtigkeit auf, bis er gesättigt ist. Dies führt gleichzeitig zu einem Aufquellen des Gemisches aus Trägermaterial und Feuchtigkeitsabsorber, welches ein weiteres Eindringen von Wasser verhindert. Damit sperrt sich die Wasserspeicherschicht, also der Feuchtigkeitsabsorber selbst gegen eine weitere Wasseraufnahme. Dadurch, daß nun die Öffnung bzw. der Durchbruch in der Behälterwand im Übergangsbereich zwischen dem Gemisch aus Trägermaterial und Feuchtigkeitsabsorber und im Pflanzmaterial angeordnet ist, kann nunmehr das überflüssige Wasser, welches nicht mehr gespeichert werden kann, seitlich aus dem Behälter austreten und es wird eine unerwünschte Durchfeuchtung der Erde zuverlässig verhindert. Andererseits kann jedoch die Erde über die große dem Gemisch aus Trägermaterial und Feuchtigkeitsabsorber zugewandte Oberfläche die von den Wurzeln benötigte Feuchtigkeitsmenge aus dem Gemisch aus Feuchtigkeitsabsorber und Trägermaterial abziehen, sodaß ein dem Bedarf entsprechender Verbrauch der im Behälter enthaltenen Flüssigkeit sichergestellt wird.

Es ist aber weiters auch ein Vorgehen nach Patentanspruch 21 möglich. Der Vorteil dieser Weiterbildung liegt darin, daß durch die im Pflanzmaterial, insbesondere der Erde verteilten Trägermaterialien mit ihrer Feuchtigkeitsabsorberbeschichtung durch das ständige Aufquellen beim Aufnehmen von Feuchtigkeit und beim Zusammenschrumpfen bei der Abgabe von Feuchtigkeit die Erde locker halten und damit ein krümeliges Pflanzmaterial schaffen.

Eine andere Weiterbildung ist nach Patentanspruch 22 vorgesehen. Durch die Verwendung einer Porenbetonschicht, die gleichzeitig als Wasserspeicher funktioniert, ist es möglich die mit Wasser zu versorgenden Pflanzen beispielsweise in einem rinnenden Gewässer oder in einem Brunnen anzuordnen, ohne daß eine unzulässige Überfeuchtung, als auch eine nicht erwünschte Austrocknung des Pflanzmaterials auftreten kann. Der Porenbeton nimmt nämlich mit den in ihn eingelagerten Feuchtigkeitsabsorber so viel Flüssigkeit auf, bisher er gesättigt ist und gibt an die darüber liegenden Pflanzmaterialschichten nur so viel Feuchtigkeit bzw. Flüssigkeit ab, als diese benötigen. Damit ist beispielsweise in städtischen Bereichen eine Pflanzenhaltung wesentlich vereinfacht. So ist es unter anderem auch möglich, Pflanzgefäße mit einer Bodenplatte herzustellen, die aus einem derartigen Porenbeton gebildet ist, sodaß sich bei länger andauernden Niederschlägen diese Porenbetonplatte nicht zuletzt durch die vorbeiströmende Bodenfeuchtigkeit anfeuchten kann. Durch die Verwendung eines Blähbetons bzw. Schaumbetons kann durch die Anzahl und Größe der Poren und die dadurch bedingte größere und kleinere Fläche über die der Feuchtigkeitsabsorber verteilt aufgebracht werden kann, die Feuchtigkeitsspeichermenge einfach reguliert werden.

Es ist aber auch die Ausführung nach Patentanspruch 23 möglich.

Weiters ist aber auch eine Ausbildung nach Patentanspruch 24 von Vorteil, da dadurch ein Versand der Pflanzen ohne daß Wurzelteile absterben möglich ist. Als überraschender Effekt kommt noch dazu, daß die Regeneration der Pflanze nach dem Einsetzen im neuen Pflanzmaterial wesentlich rascher vor sich geht, da eine kontinuierliche Versorgung mittels Nährstoffen und Feuchtigkeit in dem neuen Pflanzmaterial durch die auf die Wurzeln aufgebrachten Schutzschichten zusätzlich begünstigt wird.

Die Erfindung umfaßt auch ein Verfahren zur Herstellung einer Speichervorrichtung für Wasser wie es im Oberbegriff des Patentanspruches 25 beschrieben ist.

Dieses Verfahren ist im Kennzeichenteil des Patentanspruches 25 gekennzeichnet. Durch das Lösen des Polymers im Wasser kann dieser trotz geringer Konzentration gleichmäßig die Oberfläche des Trägermaterials überziehen. Erst der dünne Überzug ermöglicht ein allmähliches Herauslösen von Nährstoffen und bzw. oder Pflanzenschutzmitteln aus dem Trägermaterial, wodurch die langzeitliche Speicherwirkung bewirkt wird. Durch eine Veränderung der Konzentration des Polymers kann auch die Länge der Speicherwirkung beeinflußt werden. Der Vorteil dieses Verfahrens liegt darin, daß durch die Mischung im kristallinen Zustand eine gleichmäßige Verteilung ermöglicht wird. Durch die weitere Mischung im amorphen Zustand mit dem in kristallinen Zustand verbleibenden Trägermaterial, wird eine gute gleichmäßige Verteilung des Gemisches über die gesamte Oberfläche des Trägermaterials erreicht. Durch die nachfolgende Trocknung wird in überraschend einfacher Weise erreicht, daß durch die Kombination der Van der Waalschen mit den chemischen Kräften ein Zusammenhalt der Einzelteile des Trägermaterials hergestellt werden kann, der bei nachfolgenden Be- und Entfeuchtungsvorgängen nicht mehr verloren geht. Gleichzeitig wird damit aber auch eine nicht unbedeutende Verringerung des Gesamtgewichtes der Speichervorrichtung erreicht, sodaß am Transportweg vom Hersteller zum Kunden, das Gewicht der Feuchtigkeit, nicht zur Gänze in der erfindungsgemäßen Speichervorrichtung verbleiben muß.

Vorteilhaft ist auch ein Vorgehen nach Patentanspruch 26. Dadurch steigt die Wasseraufnahme bis zu einem bestimmten Porenvolumen, welches durch die Zugabe des Schäummittels eingestellt werden kann. Bei noch größeren Poren sinkt das Wasserrückhaltevermögen wieder, weil die Van der Waalschen-Kräfte nur in einem bestimmten begrenzten Abstand von der Porenoberfläche stark wirksam sind.

Eine andere Ausführungsform ist nach Patentanspruch 27 vorgesehen, wodurch neben der Flüssigkeitsabgabe an die Pflanze gleichzeitig eine humusbildende und -fördernde Pflanzenernährung entsteht.

Von Vorteil sind aber auch die Maßnahmen nach Patentanspruch 28, wodurch die offenzellige Struktur gegen eine Zersetzung im besonderen eine mikrobielle Zersetzung widerstandsfähig ist. Die Lebensdauer einer solchen Speichervorrichtung ist groß.

Vorteilhaft ist es aber auch, eine Verfahrensweise nach Patentanspruch 29, da dadurch die Menge der zu speichernden Flüssigkeit durch Steuerung der Zellgröße und der dadurch bedingten Oberflächengröße zur Aufnahme des Gemisches aus verflüssigten Hydrogel einfach gesteuert werden kann.

Eine weitere Vorgangsweise ist nach Patentanspruch 30 vorgesehen, wodurch eine gewünschte Form des Wurzelstockes, auch ohne daß dieser in einen entsprechenden Pflanzbehälter aufbewahrt werden muß, erzielt werden kann.

Es ist aber auch ein Vorgehen nach Patentanspruch 31 möglich, wodurch auf eigene Pflanzbehälter aus Kunststoff oder anderen Materialien überhaupt verzichtet werden kann.

Die Erfindung wird anhand der in den Zeichnungen gezeigten Ausführungsbeispiele näher erläutert.

Es zeigen:
- Fig. 1: eine erfindungsgemäße Speichervorrichtung für Flüssigkeiten für eine Pflanze in Seitenansicht geschnitten und vereinfachter schematischer Darstellung;
- Fig. 2: eine andere Ausführungsvariante einer erfindungsgemäßen Speichervorrichtung mit einer Zellstruktur aus überwiegend offenen Zellen, geschnitten und in vereinfachter schematischer Darstellung;
- Fig. 3: ein Gemisch aus festem Flüssigkeitsabsorber und einem kristallinen Trägermaterial in schematischer Darstellung;
- Fig. 4: einen Teil, eines durch ein Gewirke gebildetes Trägermaterial, in Seitenansicht geschnitten, mit einer Beschichtung aus einem erfindungsgemäßen Gemisch;
- Fig. 5: ein Diagramm, welches die Wasseraufnahmefähigkeit von unterschiedlichen Materialien mit und ohne dem erfindungsgemäßen Feuchtigkeitsabsorber zeigt;
- Fig. 6: ein Diagramm, welches die Abnahme des Wassergehaltes über eine Trocknungsperiode bei einer vorbestimmten Temperatur zeigt;
- Fig. 7: ein Diagramm, welches die unterschiedlichen den Pflanzen zur Verfügung stehenden Wassermengen bei einem mit Feuchtigkeitsabsorber beschichteten Trägermaterial und einem Material ohne Feuchtigkeitsabsorber zeigt;
- Fig. 8: einen Teil eines mit einem Feuchtigkeitsabsorber versehenen Porenbetonblockes und einer darauf in einem Pflanzmaterial angeordneten Pflanze in schaubildlicher Darstellung;
- Fig. 9: einen Pflanzbehälter zur Aufnahme einer erfindungsgemäßen Speichervorrichtung in Seitenansicht geschnitten und vereinfachter schematischer Darstellung;
- Fig. 10: eine andere Ausführungsform eines Behälters mit einer erfindungsgemäßen Speichervorrichtung in Seitenansicht geschnitten;
- Fig. 11: einen weiteren Behälter zur Aufnähme einer Pflanze in Seitenansicht geschnitten mit einem mit dem Gemisch durchmischten Pflanzmaterialgemisch;
- Fig. 12: einen Behälter mit einer unterhalb des Pflanzmaterials angeordneten erfindungsgemäßen Speichervorrichtung in Seitenansicht geschnitten;
- Fig. 13: eine erfindungsgemäße Speichervorrichtung, die mit einem erfindungsgemäßen Gemisch zur Aufnahme der Wurzeln der Pflanzen beschichtet ist, in Seitenansicht geschnitten und vereinfachter schematischer Darstellung;
- Fig. 14: eine Pflanze mit den daran angeordneten Wurzeln, die mit einem erfindungsgemäßen Gemisch beschichtet sind;
- Fig. 15: ein Korn eines Trägermaterials mit einer schematisch angedeuteten diesen umgebenden Wasserschicht und der schematischen Darstellung der dabei auftretenden chemischen Reaktio nen;
- Fig. 16: eine erfindungsgemäße Speichervorrichtung in einer Anordnung zum Begrünen von Dachterassen in Schüttbauweise in Seitenansicht teilweise geschnitten und stark vereinfachter schematischer Darstellung;
- Fig. 17: ein Diagram, welches die Wasseraufnahmefähigkeit von unterschiedlichen Trägermaterialien mit und ohne im erfindungsgemäßen Feuchtigkeitsabsorber und die Abnahme des Wassergehaltes über eine Trocknungsperiode zeigt.

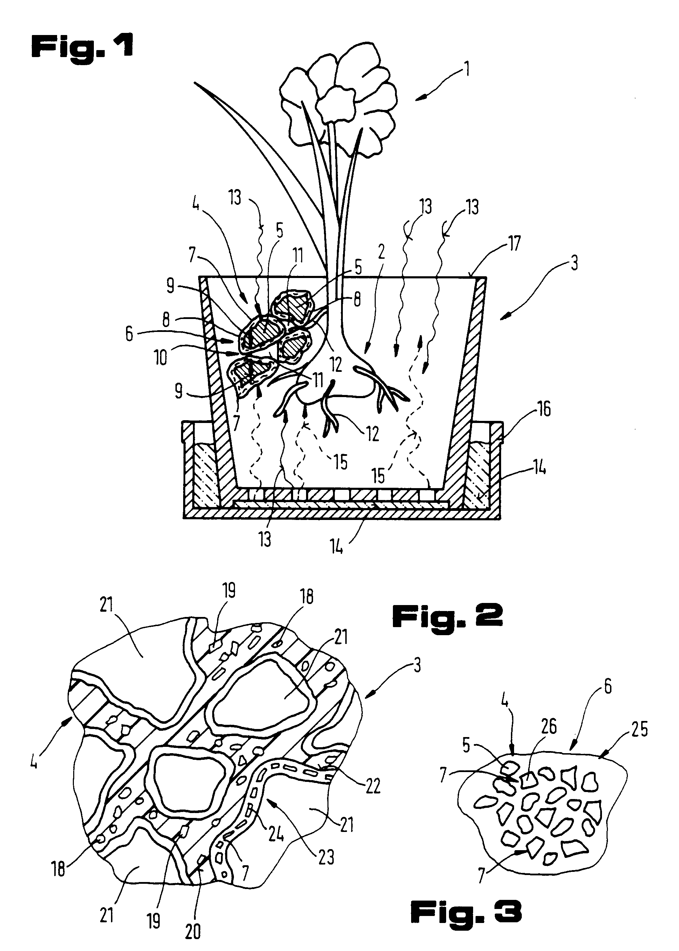

In Fig. 1 ist eine Pflanze 1, beispielsweise eine Blume gezeigt. Ein Wurzelstock 2 dieser Pflanze 1 ist in einer Speichervorrichtung 3 eingebettet. Diese Speichervorrichtung 3 besteht aus einem stabilen Trägermaterial 4, z.B. Splittkörnern 5, mit einer Korngröße von 1 - 8 mm, bevorzugt 2 - 4 mm. Das Trägermaterial 4, z.B. die Splittkörner 5 sind mit einem Gemisch 6 aus einem Feuchtigkeitsabsorber 7 und Wasser 8 durch kleine Stücke angedeutet beschicht bzw. umgeben. Schematisch ist angedeutet, daß die einzelnen Splittkörner 5 - symbolisch durch Pfeile 9 angedeutet - durch Van der Waalsche-Kräfte zusammengehalten werden. Zudem kommt es in den mit 10 bezeichneten Bereichen zu starken, polaren Anziehungskräften zwischen den Schichten des Gemisches 6, die durch die mit den Pfeilen 9 schematisch angedeuteten Van der Waalschen-Kräfte entstehen und über die Kräfte einer chemischen Bindung hinausgehen können.

Bedingt durch die Korngröße der Splittkörner 5, verbleiben zwischen diesen Hohlräume 11, durch die die Wurzeln 12, hindurchlaufen, bzw. die eine durch gewellte Pfeile 13, schematisch angedeutete Durchlüftung der Speichervorrichtung 3, bzw. eine ausreichende Sauerstoffzufuhr zu den Wurzeln 12 von oben und unten ermöglichen. Durch den engen Kontakt der Wurzeln 12 mit dem die Splittkörner 5 umgebenden Gemisch 6 können sich diese, bedingt durch den von den Wurzeln 12 erzeugten Saugdruck, das Wasser, welches in dem Gemisch 6 gespeichert ist, entnehmen. Die Feuchtigkeitszufuhr bzw. der Nachschub an Flüssigkeit 14 erfolgt, wie schematisch durch Pfeile 15 angedeutet, aus einer Schüssel 16, in die die Speichervorrichtung 3 hineingestellt ist.

Selbstverständlich ist es aber auch möglich, die Flüssigkeit - insbesondere das Wasser - dem Feuchtigkeitsabsorber 7 von der Oberseite 17 der Speichervorrichtung 3 oder durch integrierte Versorgungseinleitungen zuzuführen.

Durch den durch die hygroskopischen Eigenschaften des Feuchtigkeitsabsorbers 7 entstehenden Saugdruck, wird die Feuchtigkeit an dem Gemisch, welches die einzelnen Splittkörner 5 umgibt, wie durch die Pfeile 15 gezeigt, bis in den Bereich einer Oberseite 17, der Speichervorrichtung 3, verbracht. Die Zufuhr von Flüssigkeit 14 über die Schüssel 16 ist nicht ständig notwendig, sondern es reicht, wenn diese in Abhängigkeit vom Wasserbedarf der einzelnen Pflanzen 1, intermittierend im Abstand von Stunden, Tagen oder Wochen zugeführt wird. Das gleiche gilt auch für die Wasserzufuhr von der Oberseite 17 der Speichervorrichtung 3.

Durch die hygroskopischen Eigenschaften des Feuchtigkeitsabsorbers 7, insbesondere einem Hydrogel, wird die Feuchtigkeit in einem über die normalen Absorptionskräfte hinausgehenden Ausmaß in dem Feuchtigkeitsabsorbers 7 gehalten, wobei dieser aufquillt und einen amorphen Zustand einnimmt.

Je nach der Stärke der Wasserentnähme schrumpft das Gemisch 6 wieder, wobei das Gemisch 6 die Hohlräume 11 zwischen den einzelnen Splittkörnern 5 nutzt, um eine entsprechende Feuchtigkeitsmenge, wie teilweise durch strichlierte Linien angedeutet, wieder zu speichern.

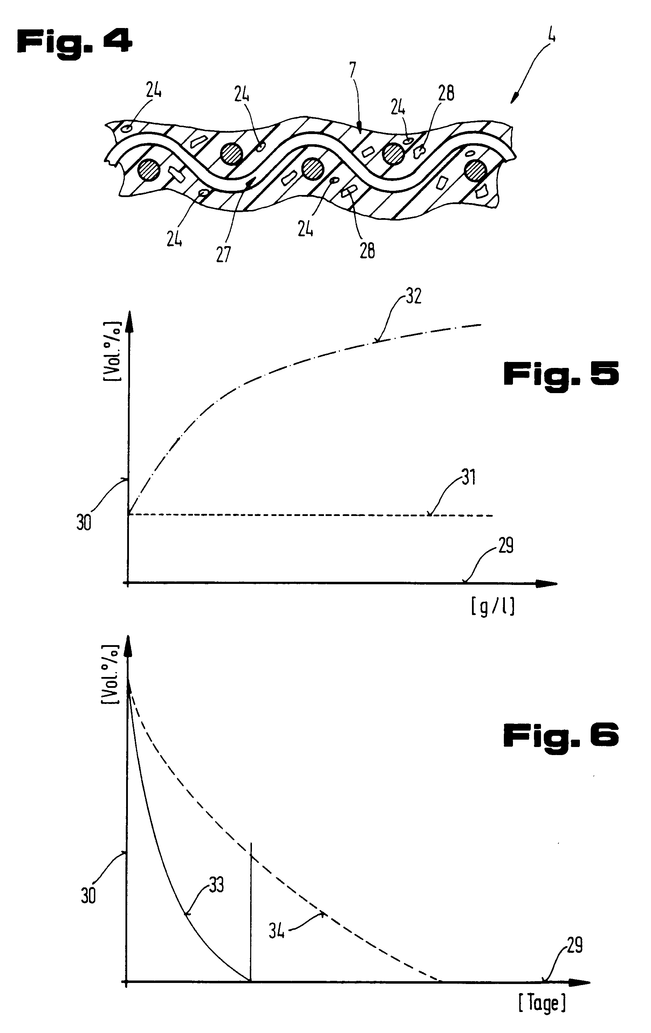

In Fig.2 ist eine andere Ausführungsvariante der Speichervorrichtung 3 gezeigt. Bei dieser besteht das Trägermaterial 4 z.B. aus Sandkörnern 18, die mit einem hydraulischen Bindemittel 19 vermischt bzw. versetzt sind. Zusätzlich wird dieser Masse ein Schaumbildner 20, insbesondere ein organopolymeres Material oder ein Tensid bzw. Tensidgemisch in wässriger Lösung zugesetzt, welcher bzw. welches während des Abbindevorganges das Gemisch aus Sandkörnern 18 und Bindemittel 19 aufbläht. Der Schaumbildner 20, welcher zum Aufblähen und Herstellen von offenen Zellen 21 in der Speichervorrichtung 3 führt, ist in der Zeichnung schematisch durch teilweise Schraffur angedeutet. Nachdem die einzelnen Sandkörner 18 mit dem Feuchtigkeitsabsorber 7 - ähnlich wie in der Darstellung nach Fig.1 - umgeben sind, ist eine Oberfläche 22 des Stützgerüstes 23 mit dem Feuchtigkeitsabsorber 7, in dem ein schematisch durch Kästchen angedeutetes Düngemittel 24 eingemischt sein kann, beschichtet.

Die gesamten Oberflächen 22 des Stützgerüstes 23 bilden somit einen Feuchtigkeitsspeicher, indem ein Vielfaches der üblicher Weise durch die Absorptionskräfte gehaltenen Flüssigkeit, wie beispielsweise Wasser, gehalten werden kann. Damit kann mit einer derart ausgebildeten Speichervorrichtung 3 eine große Menge Wasser auf engstem Raum vorrätig gehalten werden. Der Vorteil einer derartigen Ausbildung der Speichervorrichtung 3 liegt vor allem auch darin, daß diese gleichzeitig einen tragenden Bauteil bilden kann. Ein derartiges, durch die Zusetzung von Treibmitteln bzw. durch das Aufblähen mit Gas unter Verwendung von hydraulischen Bindemitteln hergestelltes Material, ist beispielsweise Gasbeton.

Da dieser auch eine entsprechende Festigkeit und Widerstandsfähigkeit gegen äußeren Einflüssen aufweist, ist es daher auch ohne weiteres möglich, derartige Speichervorrichtungen gleichzeitig als Konstruktionsteil zu verwenden. Vor allem ist es unter Umständen möglich, aus einem derart präparierten Gasbeton Blumenschalen für den Einsatz auf öffentlichen Plätzen oder Straßen herzustellen, wobei das Volumen derartiger großer Gefäße zur Aufnahme von Pflanzen gleichzeitig aber auch zur Wasserspeicherung herangezogen werden muß und damit vor allem in heißen Gegenden bzw. während der Sommerperiode derartige Pflanzen nicht jeden Tag gegossen werden müssen, sondern beispielsweise bei entsprechender Auslegung des Volumens einer derartigen Aufnahmevorrichtung ein Gießinterwall von einer Woche, auch bei extremen Hitzeperioden möglich ist.

Dazu kommt der überraschende Vorteil, daß sich derartige Speichervorrichtungen bei einem natürlichen Niederschlag selbsttätig "aufladen" und somit in Niederschlagsperioden ein zusätzlicher Gießvorgang überhaupt eingespart werden kann.

Vor allem hat eine derartig ausgebildete Speichervorrichtung 3 den Vorteil, daß das überschüssige in üblicher Weise durch den Pflanzbereich durchtretende Wasser bzw. die Feuchtigkeit dann von der Speichervorrichtung aufgenommen und in dieser abgelagert wird, wodurch neben der direkten Versorgung der Wurzeln gleichzeitig das Abfließen des überschüssigen Wassers verhindert und diese zur Pflanzenversorgung bei anschließenden Trockenperioden herangezogen werden kann.

In Fig.3 ist eine andere Ausführungsvariante gezeigt, bei der die Speichervorrichtung 3 aus einem Gemisch 25, aus einem Trägermaterial 4 beispielsweise Splittkörnern 5 von einer bestimmten Korngröße zwischen 8 und 1 mm bzw. aus Quarzsand oder dgl. gebildet ist. Dieses vorher zweckmäßig getrocknete Trägermaterial 4 ist mit Kristallen 26 des Feuchtigkeitsabsorbers 7 vermischt, wobei entsprechend dem Volums- bzw. Gewichtsanteil des Feuchtigkeitsabsobers 7 eine entsprechende Feuchtigkeitsspeicherung in diesem Gemisch 25 vordefiniert werden kann.

Wird dieses Gemisch 25 dann mit Wasser versetzt, so geht der Feuchtigkeitsabsorber 7 vom kristallinen in den amorphen Zustand über und überzieht die Trägermaterialien 4, d.h. die Splittkörner 5 bzw. Sandkörner mit diesem, wodurch die Feuchtigkeitsspeicherschichten geschaffen werden.

In Fig.4 ist eine andere Ausführungsform gezeigt, bei der das Trägermaterial 4 durch ein Gewirke 27 gebildet ist. Dieses Gewirke 27 ist mit einem Feuchtigkeitsabsorber 7, der ebenfalls wiederum mit Düngemittel 24 versetzt sein kann, überzogen. Wird nun ein derartiges Gewirke 27, welches selbstverständlich im vorliegenden Ausführungsbeispiel lediglich schematisch und stark vereinfacht dargestellt ist, mit einer entsprechenden Dicke hergestellt, so kann durch die Dicke desselben die Wasserspeichermenge vorbestimmt werden. Damit ist es aber vor allem dann, wenn der Feuchtigkeitsabsorber 7 mit Düngemittel 24 versetzt ist, möglich, unmittelbar auf das Gewirke 27 schematisch durch kleine Parallelogramme dargestellte Samenkörner 28 aufzubringen, die auf dem Gewirke 27 als Aufnahme- und Versorgungsträger austreiben können.

Damit ist es möglich, teure Pflanzkästen und bzw. oder das Aufbringen von reichen Erdenschichten einzusparen, sodaß beispielsweise devastierte Bodenflächen, wie karstige Oberflächen oder Schipisten, begrünt werden können und eventuell aber auch Küchenpflanzen von den Hausfrauen selbst in mit derartigen Gewirken 27 ausgelegten Schüsseln angepflanzt werden können.

Bei dem Trägermaterial 4 und den Düngemitteln 24 vor allem dann, wenn das Düngemittel 24 das Trägermaterial bildet, ist es von Vorteil, wenn ausgewählte feingemahlene Gesteinsmehle verwendet werden. Diese sollen dann bestimmte Nährstoffe in bestimmten Mengenverhältnissen enthalten, weil dadurch das Gleichgewicht zwischen anorganischen Bodenbestandteilen, Mikroflora und Mikrofauna nicht gestört wird. Durch leichtlösliche Nährstoffdünger, wie bisher eingesetzt, wird dieses Gleichgewicht gestört. Verdichtung des Bodens, Erosion und Garison sind die unerwünschte Folge davon. Auch sind stickstoffhaltige Gesteinsmehle bekannt, in welchen der Stickstoff als Ammoniumion vorliegt und besonders gut für die Pflanze verfügbar ist. Magnesiumhaltige Gesteinsmehle wiederum verringern den Chlorophyllabbau, der unter anderem in höheren Lagen der Mittelgebirge zur Nadelvergilbung, Röte, Verlust, sowie größerer Frostanfällgikeit der Bäume führt.

Beispielhafte Analyse für Gesteinsmehl:

| | |
|---|---|
| SiO₂ | 61 % |
| Al₂O₃ | 18 % |
| K₂O | 9 % |
| Fe₂O₃ | 4,7 % |
| MgO | 1,5% |
| P₂O₅ | 0,17 % |
| CaO | 0,2% |
| NH₄-N | 1,05 mg/kg |
| NO₃-N | 2,7 mg/kg |

und Spurenelemente
Die ausgewählte Mischung verschiedener Steinmehle ist geeignet spezifische pflanzenphysiologische Probleme zu lösen bzw. eine ausgewogene Nährstoffbilanz herzustellen. Natürliche Gesteinsmehle, wie beispielsweise vulkanogenes Mineral besitzt kristallstrukturbedingt hohe Affinität zu Stickstoffverbindungen oder niedermolekularen bzw. anderen spezifischen Nährstoffen.

Beispielhafte Analyse für eine Gesteinsmehl-Mischung:

| | |
|---|---|
| SiO₂ | 40,6 % |
| Al₂O₃ | 8,1 % |
| CaO | 11,7% |
| Na₂O | 0,5 % |
| K₂O | 5,5% |
| MgO | 24,7 % |
| Fe₂O₃ | 2,3 |

und Spurenelemente
- oder Mineralbestandteile:: 80 % Klinoptilolith
10 % Cristobalith
5 % Plagioglas
3 % Glimmer
Natürliche Gesteinsmehle bauen den Ton-Humus-Komplex auf und sind als Ionenaustauscher Nährstoff- und Wasserreservoire für die Bodenkleinlebewesen und die Wurzelsymbionten wichtig. Sie geben nach Bedarf der Pflanze bestimmte Stoffe ab. Die silikatischen Gesteinsmehle liefern auch das essentielle Spurenelement Silizium, welches für die Festigung der Stützgewebe der Pflanzen und Gräser wichtig ist und darüber hinaus gegen Krankheiten und Schädlingsbefall vorbeugt.

Die derart ausgebildeten erfindungsgemäßen Speichervorrichtungen 1 erhöhen in weichen, sandigen Böden die Wasser- und Nährstoffspeicherfähigkeit, machen schwere lehmige Böden poröser, lockerer und wärmer und bilden in kargen Böden ein Substrat für Mikroorganismen und deren Symbiose mit Wurzeln. Sie regulieren den pH-Wert und aktivieren aufgrund ihrer großen Oberflächenkräfte (Van der Waalschen-Kräfte) die biophysikalischen und biochemischen Wechselwirkungen.

Von Vorteil ist es aber auch, wenn der Speichervorrichtung 3 ein flüssiger Auszug aus verrottetem Traubentresterhumus als Düngemittel 24 oder verrotteter Traubentrester in körniger Festform als Düngemittel 24 und bzw. als Trägermaterial 4 zugesetzt wird. Dadurch wird die mineralische Komponente um die organische Komponente erweitert. Dadurch erhalten die Wurzelsymbionten der Pflanze wachstumsfördernde Stoffe. Die Ekto- und Endomykorrhiza können vermehrt Überschüsse an die Wurzeln der Pflanzen weitergeben. Auch die frei lebenden Populationen von Mikroorganismen erhalten Nahrung. Azotobacter beispielsweise kann mehr atmosphärischen Stickstoff binden. Der Energiegehalt der trockenen, organischen Substanz liegt bei 20 MJ/kg. Diese Energien haben die Mikroorganismen zur Veratmung zur Verfügung und können diese in ihren eigenen Energiehaushalt einbeziehen.

Als Traubentrester wird ein solcher nach seiner Verrottung verwendet. Phytotoxische Stoffe, sowie synthetische Fungizide und Insektizide werden während des Rotteverlaufs abgebaut. Traubentrester besitzen von Natur aus ein Kohlenstoff: Stickstoff-Verhältnis wie 25 bis 30 : 1, sodaß Stickstoff für das Wachstum von Organismen reichlich zur Verfügung steht. Phosphor und alle übrigen Nährstoffe und Spurenelemente liegen in ausgewogener Form vor.

Auch ist nach den ersten Versuchen zu erwarten, daß eine vermehrte Resistenz gegenüber Schädlingsbefall erzielt wird, da die bei der Tresterhumifizierung beteiligten Mikroorganismen Gerbstoffe und andere phenolische Substanzen zu einfachen Phenolkarbonsäuren abbauen, die von den Pflanzenwurzeln leicht aufgenommen werden können und den Pflanzen offensichtlich als Schutzstoffe dienen.

Für Spezialkulturen können Schalen-, Kamm- und Traubenkerndünger sowie feiner Kernschrot oder aus der Kernschrotfraktion ein flüssiger Auszug eingesetzt werden. Je nach Zusammensetzung des organischen Anteils, des Gesamtstickstoffs, des Kaliums, des Phosphors, des Magnesiums usw., wird die Speichervorrichtung beladen. Als Universaldünger hat sich neben dem Schalendünger am besten eine Kernschrotfraktion bis zu 0,5 mm Partikelgröße bewährt. Diese Fraktion besteht zum größten Teil aus humifizierten Nährgewebe und dem Keimling.

Beispielhafte Analyse für feinen Kernschrot:
7,8 % Asche
92 % organischer Anteil
3,4 % Gesamtstickstoff
1,2 % P₂0₅
3 % K₂O
0,4 % MgO
2,0 % CaO
41 ppm Cu
81 ppm Mn
1320 ppm Fe
180 ppm Zn
0,3 ppm Co
0,3 ppm Mo
19 ppm B
C : N = 9 : 1
oder
Beispielhafte Analyse für flüssigen Auszug aus einer Kernschrotfraktion:
28,5 % Asche
71,5 % organischer Bestandteil
4,9 % Gesamtstickstoff
3,1 % P₂O₅
14,6 % K₂O
0,9 % MgO
1,0 % CaO
63 ppm Cu
34 ppm Mn
286 ppm Fe
114 ppm Zn
0,6 ppm Co
1,1 ppm Mo
74 ppm B
Der überwiegende Teil des Stickstoffs liegt in organisch gebundener Form vor und wird erst durch den Abbau für die Pflanzen verfügbar. Mit den humifizierten Trestern kommen die Mikroorganismen gleich mit in die Speichervorrichtung. Je nach Umweltbedingungen, z.B. kalt oder wann, und je nach Pflanzenbedarf liefern die Mikroorganismen beispielsweise den notwendige Stickstoffbedarf und die organisch gebundene Stickstoffreserve wird nur langsam aufgezehrt und bleibt für zukünftige Bedarfspitzen langzeitlich erhalten. Dadurch werden die Voraussetzungen für einen ausgewogenen und nicht übereilten Aufbau an pflanzlichen Zellgeweben geschaffen.

### Beispiel 1:

### Herstellung einer faserhaltigen Speichervorrichtung 3:

20 g fester, pulverförmiger Feuchtigkeitsabsorber 7 z.B. ein Kaliumsalz eines leicht vernetzten Polymeren auf Propenamidbasis bzw. eines Natrium/Kalium-Salz eines vernetzten Poly (Acrylamid-co-Acrylamidomethylpropansulfonsäure) werden mit 980 g Wasser derart vermischt, daß eine homogene gelartige Masse entsteht. Zu dieser Masse werden zuerst 150 g Steinwolle als Trägermaterial 4 zugemischt, nachfolgend 100 g feingemahlenes Steinmehl als Düngemittel 24 bzw. auch als Trägermaterial 4. Die plastisch verformbare Masse kann zum Teil getrocknet werden oder wie im Originalzustand eingesetzt werden beispielsweise im Boden von Blumentöpfen.

Diese Speichermasse kann auch zur Beschichtung in dicker Schicht von z.B. dichten Oberflächen wie Felsen, Felsensteinen, Betonoberflächen etc., Verwendung finden. In die Speichermasse können vor dem Aufbringen Samen eingebracht werden, wobei diese Beschichtungsmasse jedoch innerhalb weniger Tage wegen des frühzeitigen Keimens aufgebracht werden muß.

### Beispiel 2:

### Herstellung einer splitthaltigen Speichervorrichtung 3:

1000 g Splitt als Trägermaterial 4 (gebrochene Körner mit Durchmesser von 2 mm bis 4 mm) werden in 255 g gelartigem Feuchtigkeitsabsorber 7, hergestellt aus 5 g festem Feuchtigkeitsabsorber 7 und 250 g Wasser, eingemischt. Danach werden 100 g feingemahlenes Steinmehl, insbesondere als Düngemittel 24 bzw. auch als Trägermaterial 4 eingemischt. Hierauf kann je nach Bedarf Dünger zugemischt werden.

### Beispiel 3:

### Herstellung einer zur Beschichtung geeigneten Speichervorrichtung 3:

20 g fester, pulverförmiger Feuchtigkeitsabsorber 7 wird mit 980 g Wasser derart vermischt, daß eine homogene gelartige Masse entsteht. Zu dieser Masse werden 100 g feingemahlenes Steinmehl als Trägermaterial 4 zugemischt. Die nach diesem Verfahren hergestellte Masse kann in dicker Schicht auf Oberflächen, besonders geeignet auch auf verschiedenen Vliesen und Geweben, aufgeschüttet, aufgespachtelt oder aufgespritzt werden. Vor ihrer Verarbeitung kann der Beschichtungsmasse noch Grassamen oder andere Samen in der notwendigen Menge zugefügt werden. Auch ist der Zusatz von Düngemitteln möglich.

### Beispiel 4:

### Herstellung einer betonartigen Speichervorrichtung 3:

300 g Zement PZ 375 werden mit 300 g Sand, Körnung (0 bis 0,5 mm) trocken vorgemischt. Danach werden 260 g gelartiger Feuchtigkeitsabsorber 7 (hergestellt aus 4 g festem Feuchtigkeitsabsorber und 260 g Wasser) mit 60 g feingemahlenem Steinmehl gemischt und 25 g eines Schaumbildners, welcher vorzugsweise aus einem Tensid bzw. Tensidgemisch in wässriger Lösung besteht, zugesetzt. Diese Mischung aus Feuchtigkeitsabsorber 7, Steinmehl und Schaumbildner wird nun mit obiger Masse aus Zement und Sand vermischt und in Formen gegossen. Die Härtungsdauer und die Nachbehandlung des Porenbetons entspricht den Richtlinien für die Betonherstellung.

### Beispiel 5:

### Kombination zweier Speichervorrichtungen 3:

Die nach Beispiel 4 hergestellte Betonplatte kann mit dem Speichermaterial, welches im Beispiel 1, 2, 3, 6 oder 7 angeführt wurde, beschichtet werden.

### Beispiel 6:

### Herstellung einer pulverförmigen Speichervorrichtung 3:

10 g fester, pulverförmiger Feuchtigkeitsabsorber 7 wird mit 200 g Steinmehl als Trägermaterial 4 trocken gemischt und nach Bedarf flüssiger oder fester Dünger zugesetzt. Diese trockene Mischung - trotz Zugabe flüssigen Düngers - wird beispielsweise zur Pflanzenerde oder Sand beigemengt. In diese pulverförmige Speichervorrichtung können andere Trägermaterialien 4 wie beispielsweise Fasern z.B. Steinwolle und bzw. Splitt derart eingemischt werden, daß die Fasern bzw. der Splitt vorerst in einer bestimmten Menge Wasser aufgerührt werden und dann die pulverförmige Speichervorrichtung, wie vorher beschrieben, zugesetzt wird. Es entstehen dadurch bereits wasserhaltende, plastisch verformbare Speichervorrichtungen.

### Beispiel 7:

Herstellung wie im Beispiel 1 bis 6 jedoch statt des synthetischen Feuchtigkeitsabsorbers 7 wird ein natürlicher verwendet, wie beispielsweise ein Polysaccharid. Gegenüber dem organo-synthetischen genügen oft schon geringere Mengen an Polysaccharid, um die gleichen wasserspeichenden Effekte zu erreichen.

Um die Wirkung des Feuchtigkeitsabsorbers 7 graphisch besser darstellen zu können, wurden verschiedene Zusammenhänge, vor allem die Wasseraufnahmekapazität, die für die Pflanze verfügbare Wassermenge und die Austrocknungszeit von einem Trägermaterial 4, z.B. Sand alleine eines mit einem Feuchtigkeitsabsorber 7 beschichtetes Trägermaterial 4 gegenübergestellt.

In Fig.5 ist der mögliche Wassergehalt in einem Trägermaterial, beispielsweise Sand und einem mit einem Feuchtigkeitsabsorber 7 vermischten Trägermaterial 4 gegenübergestellt. Auf der Abszisse 29 ist die Menge des Feuchtigkeitsabsorbers in Gramm pro Liter Flüssigkeit, wie sie bei der Herstellung des Gemisches zum Beschichten des Trägermaterials mit dem Feuchtigkeitsabsorber zugesetzt wird, aufgetragen, während auf der Ordinate 30 der Wassergehalt, der in dem Gemisch aus Trägermaterial 4 und Feuchtigkeitsabsorber 7 bzw. nur im Trägermaterial 4 gehalten werden kann, in Vol.% festgehalten.

Eine Linie 31 zeigt dabei den maximalen Wassergehalt an, der in einem durch Sand gebildeten Erdboden gehalten werden kann. Dieser liegt bei 20 Vol.%. Dagegen zeigt die Kurve 32 in strich-punktierten Linien, daß der Wassergehalt in einem Gemisch aus Trägermaterial 4 und Feuchtigkeitsabsorber 7 in Abhängigkeit von der Menge an Feuchtigkeitsabsorber 7 bis zu 70 Vol.% betragen kann. Der Wassergehalt liegt daher um ein Vielfaches höher, als die mit der natürlichen Wasserhaltungseigenschaft des Sandes speicherbare Wassermenge.

In Fig.6 ist dann die Trockenzeit auf der Abszisse 29 in Tagen aufgetragen, wobei diese Trockenzeit auf eine Temperatur von +40C bezogen ist. Auf der Ordinate 30 ist wiederum der Wassergehalt in Vol.% aufgetragen. Wie die in vollen Linien gezeichnete Kurve 33 für den Sand ohne Feuchtigkeitsabsorber 7 zeigt, ist der Wassergehalt bei einer Temperatur von +40C nach drei Tagen auf Null zurückgegangen.

Demgegenüber zeigt die Kurve 34 in strichlierten Linien, daß bei einem erfindungsgemäßen Gemisch aus Trägermaterial 4 und Feuchtigkeitsabsorber 7 das zu einem Zeitpunkt, zu dem der normale Sand bereits völlig getrocknet ist, noch nahezu die Hälfte an Feuchtigkeit in dem erfindungsgemäßen Gemisch enthalten ist. Dies besagt nunmehr, daß der Feuchtigkeitsverlust bei hohen Außentemperaturen erheblich geringer ist und damit die Zeitspanne zwischen aufeinanderfolgenden Gießvorgängen erheblich länger sein kann.

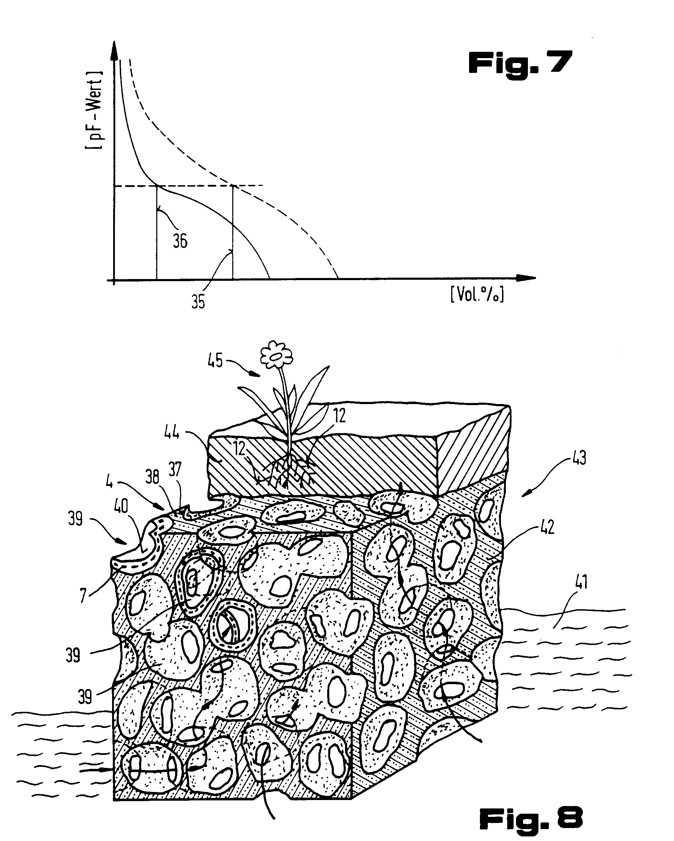

In Fig.7 ist schließlich gezeigt, daß bei einer Feldkapazität (Wasserdruck-Wert), sprich einem pF-Wert von ca. 1,8 für die Pflanze dieser gemäß Kennlinie 35 ein nahezu dreifaches Feuchtigkeitsvolumen für das Gemisch aus Trägermaterial 4 und Feuchtigkeitsabsorber 7 zur Verfügung steht, als bei der Verwendung von reinem Sand gemäß Kennlinie 36. Bei einem pF-Wert von 3,8 beginnt bereits das Welken der Pflanzen.

In Fig.8 ist anhand eines Trägermaterials 4 aus durch eine Schraffur angedeuteten Zement 37 und einem durch Punkte angedeuteten Sand 38, welcher mit einem Feuchtigkeitsabsorber 7 - durch kleine Kästchen angedeutet - vermischt ist. Wird in ein derartiges Gemisch vor dem Erhärten ein Schaumbildner, beispielsweise ein eiweißhältiger Schaumbildner eingebracht bzw. dem Beton durch den Mischvorgang sehr viel Luft zugeführt, so kommt es zu einer in der Zeichnung gezeigten offenporigen Betonstruktur, also einem Porenbeton. Wie nun weiters in der Zeichnung schematisch angedeutet, führt jede offene Zelle 39 an ihrer Oberfläche, da die Trägermaterialien wie Sand 38 und Zement 37 auf ihrer gesamten Oberfläche mit einem Feuchtigkeitsabsorber 7 beschichtet sind, zur Ausbildung einer Schicht 40 aus Feuchtigkeitsabsorber 7, der durch kleine Wellenlinien in der Schicht 40 angedeutet ist. Diese Schicht 40 kann nunmehr bei der Zufuhr von Feuchtigkeit durch die offenen Zellen 39 dem Inneren des Porenbetons zugeführt werden. Durch die hykroskopischen Eigenschaften des Feuchtigkeitsabsorbers 7 wird die Flüssigkeit an der Oberfläche in einem über das übliche Haftmaß der Flüssigkeit hinausgehendes Ausmaß gespeichert, sodaß schlußendlich die Zellen 39, wie teilweise angedeutet, auf das durch strichlierte Linien angedeutete Ausmaß verkleinert werden. Damit wird ein weiterer Zugang von Feuchtigkeit, vor allem wenn der Formbeton in einer Flüssigkeit, beispielsweise Wasser 41 steht, von selbst unterbunden, da der Durchtrittsquerschnitt in die offenen Zellen 39 so weit verringert wird, daß weitere Flüssigkeit bzw. weiteres Wasser 41 nicht mehr in den offenen Zellen 39 eintreten kann. Sicherlich wird ein Teil des Wassers 41 auch in dem Stützgerüst 42 zwischen den einzelnen offenen Zellen 39 gehalten. Der überwiegende Teil an Wasser 41 wird jedoch in den Schichten 40 in den einzelnen offenen Zellen 39 gespeichert. Mit zunehmender durch die Schicht 40 gespeicherter Flüssigkeitsmenge nehmen auch die hygroskopischen Eigenschaften der Schicht 40 stark ab, sodaß ein weiterer Transport des Wassers 41 in den offenen Zellen 39 von selbst mit zunehmender Zeitdauer der Wasseraufnahme unterbunden wird.

Ist nun, wie weiters schematisch dargestellt, auf dem Block 43 aus Porenbeton eine Schicht aus Erde 44 bzw. einem anderen Pflanzmaterial angeordnet, so können sich die Wurzeln 12 der Pflanze 45, die von ihnen benötigte Feuchtigkeit bzw. das Wasser 41 durch die in der Erde 44 bzw. in dem offenen Zellgerüst entstehende Kapillarwirkung, heranführen.

Damit baut sich die in den einzelnen Zellen 39 gespeicherte Wassermenge bzw. Feuchtigkeit ab, bis der gesamte Block 43 aus Porenbeton praktisch ausgetrocknet ist. Dabei wird durch die hygroskopischen Eigenschaften der Schichten auch das im untersten Bereich des Blockes 43 befindliche Wasser in den Bereich der Erde 44 verbracht, womit der verbliebene Restwasseranteil äußerst gering ist.

Durch dieses System ist es daher möglich, die in den Diagrammen in den Fig.5 bis 7 gezeigten Wirkungen für die Flüssigkeit bzw. Feuchtigkeitsversorgung von Pflanzen 45 zu verwenden.

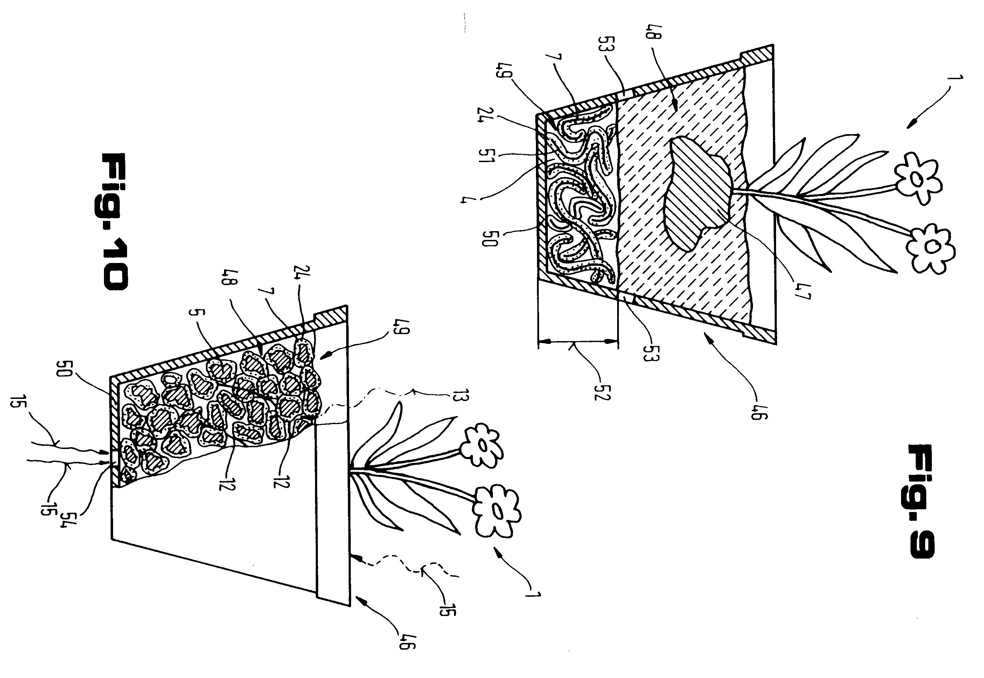

In Fig.9 ist ein Behälter 46 zur Aufnahme einer Pflanze 1, deren Wurzelstock 47 in einem Pflanzmaterial 48, beispielsweise einer Erde eingebettet ist, dargestellt. Zur Versorgung des Wurzelstockes 47 mit der für das Wachstum der Pflanze 1 ausreichenden Feuchtigkeit, insbesondere Wasser und gegebenenfalls Nährmittel, dient ein Gemisch 49, welches zwischen dem Pflanzmaterial 48 und einem Boden 50 des Behälters 46 angeordnet ist. Dieses Gemisch ist aus einem faserförmigen Trägermaterial 4, im vorliegenden Fall Steinwollfasern 51 und einem diese umgebenden Feuchtigkeitsabsorber 7 zusammengesetzt. In dem Feuchtigkeitsabsorber 7 können, wie durch Punkte angedeutet, Düngemittel 24 eingelagert sein. Durch entsprechende Vermischung der Steinwollfasern mit einem Gemisch aus dem Feuchtigkeitsab-sorber 7, beispielsweise einem Polysaccharid oder einem anderen Hydrogel und Wasser, wird eine gleichförmige Beschichtung der Steinwollfasern 51, wie schematisch in der Zeichnung unmaßstäblich vergrößert und zum besseren Verständnis übertrieben dargestellt erzielt. In Wirklichkeit weisen diese Steinwollfasern 51 einen ganz geringen Durchmesser auf und bilden nach dem Beschichten mit dem Feuchtigkeitsabsorber 7 und Wasser einen durch Druck verformbaren Ballen aus dem erfindungsgemäßen Gemisch 49. Mit diesem Gemisch wird der untere Teil des Behälters 46 auf eine Höhe 52, die entsprechend dem Wasserbedarf der Pflanze 1 festgelegt werden kann, mit dem Gemisch 49 gefüllt. In der Höhe 52 oberhalb des Bodens 50 ist bevorzugt zumindest eine Öffnung 53 im Behälter 46 vorgesehen. Diese Öffnung 53 bzw. ein Durchbruch dient dazu, um nach der Sättigung des Gemisches 49 mit Feuchtigkeit bzw. Wasser und Nährstoffen die überflüssige Menge an Wasser bzw. Nährstoffen nach außen abzuführen, sodaß eine Überfeuchtung des Pflanzmaterials 48 zuverlässig verhindert wird. Überdies wird durch die Auslegung des Gemisches 49 eine Übersättigung mit Wasser bzw. Feuchtigkeit verhindert.Dies erfolgt derart, daß durch das Aufquellen des Feuchtigkeitsabsorbers 7 bei Aufnahme von Feuchtigkeit bzw. Wasser alle Poren bzw. Öffnungen im Gemisch 49 verschlossen werden, wobei nach einer Sättigung mit Feuchtigkeit der untere Teil des Behälters 46 praktisch verschlossen ist, sodaß weiteres von oben zugeführtes Wasser über die Öffnungen 53 zum Austritt durch die Wände des Behälters 46 gezwungen wird und abfließt.

In Fig. 10 ist eine andere Ausführungsform eines erfindungsgemäßen Gemisches 49 gezeigt. Das Gemisch 49 besteht dabei aus Splittkörnern 5 und Feuchtigkeitsab-sorber 7 bzw. gegebenenfalls Düngemitteln 24. Durch die Vermischung der Splittkörner 5 mit dem Feuchtigkeitsabsorber 7 unter Beisetzung von Flüssigkeit, wird eine große Oberfläche zur Feuchtigkeits- bzw. Wasseraufnahme geschaffen, sodaß das Wasser schlußendlich alle Hohlräume zwischen den einzelnen Splittkörnern 5 ausfüllen kann. Durch die verwendete Korngröße der Splittkörner kann überdies der mögliche Hohlraum für die Ausbreitung der Wurzeln 12 geschaffen werden, die sich, wie schematisch angedeutet, durch diese Hohlräume durchzwängen und so das gesamte durch das Gemisch 49 gebildete Pflanzmaterial 48 durchdringen. Aufgrund der gesamten Durchsetzung des Pflanzmaterials 48 mit dem Feuchtigkeitsabsorber 7, wird ein feinfühliger und großflächiger Feuchtigkeitsübergang von dem Feuchtigkeitsabsorber 7 auf die Wurzeln 12 ermöglicht. Gleichzeitig begünstigen die Hohlräume zwischen den einzelnen Splittkörnern 5 aber auch die Durchlüftung und Sauerstoffzufuhr zu den Wurzeln 12. Die Wasserzufuhr erfolgt bei dieser Füllung des Behälters 46 in bevorzugter Weise von unten her, wie dies durch die Pfeile 15 schematisch angedeutet ist, wozu im Boden 50 Öffnungen 54 angeordnet sein können. Desgleichen ist es aber auch ebenso möglich, wie ebenfalls durch einen strichlierten Pfeil 15 angedeutet, Feuchtigkeit von oben zuzuführen. Gleichermaßen kann, wie mit strichpunktierten Pfeilen 13 angedeutet, Sauerstoff, insbesondere von oben her den Wurzeln 12 zugeführt werden. Damit wird ein gesundes wachstumförderndes Klima in einem mit einem erfindungsgemäßen Gemisch 49 befüllten Behälter 46 zum Aufzug einer Pflanze 1 erreicht.

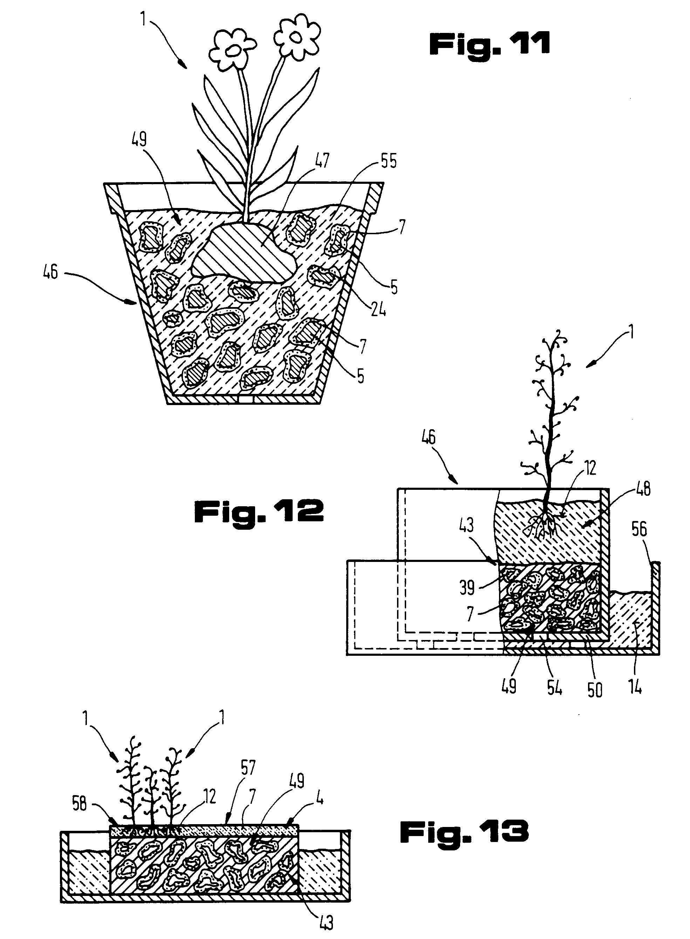

Bei der in Fig.11 dargestellten Ausführungsvariante ist der Behälter 46 zur Aufzucht der Pflanze 1 mit einem Gemisch aus Splittkörnern 5, beispielsweise auch Quarzkörnern, die mit einem Feuchtigkeitsabsorber 7 und der Flüssigkeit beschichtet sind, gefüllt, die zusätzlich mit einer Erde 55 als Pflanzmaterial vermischt ist. Der Wurzelstock 47 ist in die, mit dem erfindungsgemäßen Gemisch 49, vermischte Erde 55 eingesetzt. Durch das Aufquellen des Feuchtigkeitsabsorbers 7, der an der Oberfläche der Splittkörner 5 angeordnet ist, wird beim Einbringen der Feuchtigkeit bzw. des Wassers für die Pflanze 1 die umgebende Erde zusammengedrückt, wobei beim Zusammenschrumpfen des Feuchtigkeitsabsorbers nach dem Feuchtigkeitsentzug zwischen den Splittkörnern 5 und der umgebenden Erde 55 ein Hohlraum geschaffen wird. Durch dieses Wechselspiel zwischen der Ausdehnung der Splittkörner mit ihrer Feuchtigkeitsabsorberbeschichtung und dem Zusammenschrumpfen derselben wird die Erde locker gehalten und zusätzlich Freiraum geschaffen, in welchem sich die Wurzeln 12 des Wurzelstockes 47 ausdehnen können. Dadurch kommt es auch zu einer innigen Berührung mit den Feuchtigkeitsabsorbern 7 an den Oberflächen der Splittkörner 5 und somit zu einem guten Feuchtigkeitsübergang. Gleichzeitig wird dadurch die Erde locker und krümelig gehalten, sodaß auch eine ausreichende Sauerstoffzufuhr zu den Wurzeln 12 der Pflanze 1 bzw. dem Wurzelstock erzielt wird.

In den Fig. 12 und 13 ist das erfindungsgemäße Gemisch 49 in einem Block 43 aus Porenbeton, wie er beispielsweise in Fig.8 bereits näher beschrieben worden ist, angeordnet. Zur Vermeidung von Wiederholungen wird auf die genaue Ausgestaltung des Porenbetons, die in den Fig. 12 und 13 nur rein schematisch angedeutet worden ist, auf die vorangehende Fig.8 verwiesen. Auf diese Schicht aus Porenbeton, die beispielsweise in einem Behälter 46 eingegossen sein kann, ist in Fig. 12 eine Schicht aus Pflanzmaterial 48 aufgebracht, in die die Wurzeln 12 einer Pflanze 1 eingesetzt sind. Über Öffnungen 54 im Boden 50 des Behälters 46 wird von dem erfindungsgemäßen Gemisch 49 die jeweils benötigte Feuchtigkeitsmenge, bzw. Wassermenge zur Sättigung des Feuchtigkeitsabsorbers 7, mit welchem die Oberflächen der offenen Zellen 39 beschichtet sind, angesaugt. Die benötigte Feuchtigkeit bzw. das Wasser 41 kann hierzu in einem Vorratsbehälter 56 angeordnet sein, der regelmäßig mit Wasser nachgefüllt wird.

Bei der Ausführungsvariante in Fig. 13 sind die Wurzeln 12 der Pflanzen 1 in einer Schicht aus einem erfindungsgemäßen Gemisch 57 aus einem Trägermaterial 4, beispielsweise einem Steinmehl und einem Feuchtigkeitsabsorber 7 angeordnet. Diese auf den Block aus Porenbeton aufgebrachte Schicht 58 lagert die Wurzeln 12 der Pflanzen 1 und führt diesen ausreichend Nährstoffe und Feuchtigkeit zu. Bei Kleinpflanzen, wie beispielsweise Heilkräutern oder Kresse ist es auch möglich, die Samen in die Schicht 58 einzubringen und diese als gebrauchsfertige Paste verkaufsfertig anzubieten. Der Benutzer hat dann die Möglichkeit, auf einem entsprechenden Untergrund diese Paste aufzustreichen, wobei die Wasserversorgung durch Gießen bei einer dichten Auflage oder von unten her, falls das Gemisch auf eine durchlässige Netzstruktur aufgebracht wird, zuzuführen.

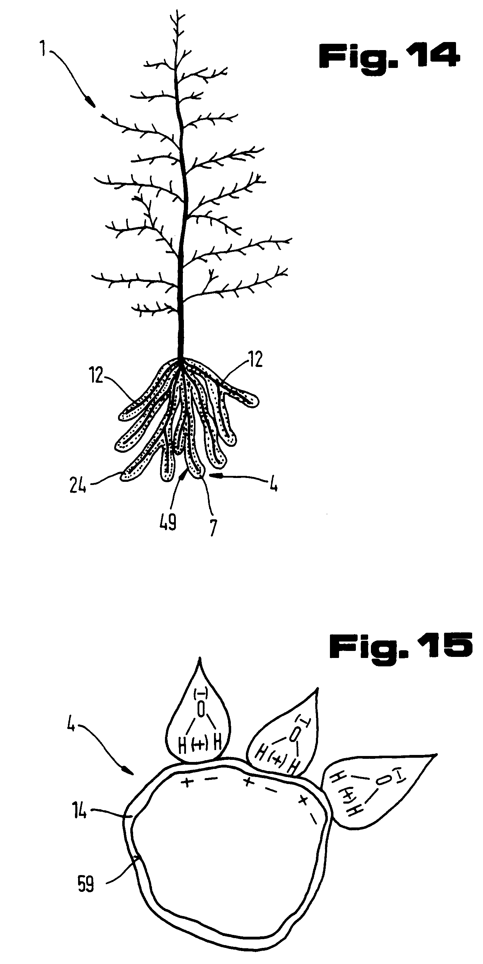

In Fig. 14 ist anhand einer weiteren Ausführungsvariante gezeigt, daß zum Schutz von Wurzeln 12 einer Pflanze 1 die Wurzeln bzw. der gesamte Wurzelknollen mit einem erfindungsgemäßen Gemisch 49 bestehend aus einem Trägermaterial 4, beispielsweise Steinmehl und einem Feuchtigkeitsabsorber 7 beschichtet werden kann. Dazu ist es zweckmäßig, wenn die aus der Aufzucht kommenden Pflanzen 1 mit Wasser, beispielsweise aber auch unter Verwendung eines Dampfstrahls von der meist durch Überdüngung verschmutzten Erde zur Gänze befreit werden und danach in ein flüssiges Gemisch, welches durch Zugabe von ausreichend Flüssigkeit mit Feuchtigkeit gesättigt ist, eingetaucht werden. Dadurch kann sich das erfindungsgemäße Gemisch 49 über die Oberflächen der Wurzeln 12 verteilen und diese gegen Austrocknen schützen. Dazu kommt aber, daß durch die Abgabe der Feuchtigkeit an die Wurzeln der Wachstumsprozeß auch während des Transportes und der Lagerung einer derartigen Pflanze 1 nur unwesentlich unterbrochen wird, bzw. bei Verwendung eines Trägermaterials, welches gleichzeitig als Düngemittel wirkt oder eines zusätzlichen Düngemittels 24 der normale Wachstumsprozeß, wenn auch in verzögerter Form, weitergeführt werden kann.

Ein darüber hinausgehender Vorteil dieser Ausbildung liegt aber darin, daß eine in die fremde Erde neu eingesetzte Pflanze 1 durch die über die Beschichtung mitgelieferte Wasser- und Nahrungsmittelversorgung rascher anwachsen kann und dadurch eine höhere Widerstandskraft gegen Krankheiten und Schädlinge bereits unmittelbar nach dem Aussetzen im neuen Pflanzenbereich aufweist.

Wie weiters in Fig. 15 in unmaßstäblich übertriebener Größenordnung dargestellt, kommt es beim Einsatz eines Steinmehls bzw. silikatischer Stoffe als Trägermaterial 4 bzw. in das erfindungsgemäße Gemisch 49 eingemischten Düngemittels 24 zu einer Ladungsverschiebung in und zwischen den Dipolmolekülen des Wassers. Dies deshalb, da das Steinmehl besonders in feingemahlenem Zustand aufgrund seiner Oberflächenkräfte die Wassermoleküle mit einer besonderen Dipol-Orientierung an seiner Phasengrenzfläche lagert. Die Oberflächenkräfte werden durch starke, polare Kräfte, welche als Wechselwirkungskräfte wirksam werden, gebildet. Durch diese starke Orientierung der Wassermoleküle und die damit verbundene inter- und intramolekulare Ladungsverschiebung wirkt das Wasser 14 unmittelbar an der Phasengrenzfläche, nämlich zwischen der Steinoberfläche 59 und dem Wasser 41 stärker sauer und löst dadurch allmählich Bestandteile wie Ionen, etc. aus den an sich wasserunlöslichen Steirkörnchen heraus. Die herausgelösten Bestandteile wirken pflanzenphysiologisch als Nährstoffe und bilden sich in der Weise nach, wie sie von den Wurzeln der Pflanze verbraucht werden, wodurch eine chemische Gleichgewichtseinstellung und ein weiterer Löseeffekt erzielt wird.

Die erhöhte Acidität des Wassers an den Grenzflächen silikatischer Materialien wie z.B. von Steinmehl ist aufgrund der Regel des Elektronen-Donor-Acceptor-Konzepts erklärlich: Die in Steinmehlen häufig vorhandenen SiO₃-, SiO₄-, Si₂O₆-, Si₃O₁₀- etc. Atomgruppen sind stark negativ polar (Donor) und verschieben dadurch die Polaritäten im Wassermolekül (Acceptor) derart, daß es zu einer Erhöhung des positiven Ladungszustandes und damit zu erhöhter Acidität kommt. Die Wasserstoffatome der Wassermoleküle unmittelbar an der Phasengrenzfläche haben höhere positive Partialladungen als die üblichen in das Wasserinnere hin liegenden. Messungen an Glaskapillaren (silikatische Stoffe) zeigen, daß die spezifische Wärme eines solchen dünnen Wasserfilms an der Grenzfläche silikatischer Stoffe rund 20 % höher liegt. Dies ist auch der Grund dafür, daß Lösungen höherer Konzentration entstehen können, als sie aufgrund thermodynamischer Befunde zu erwarten wären.

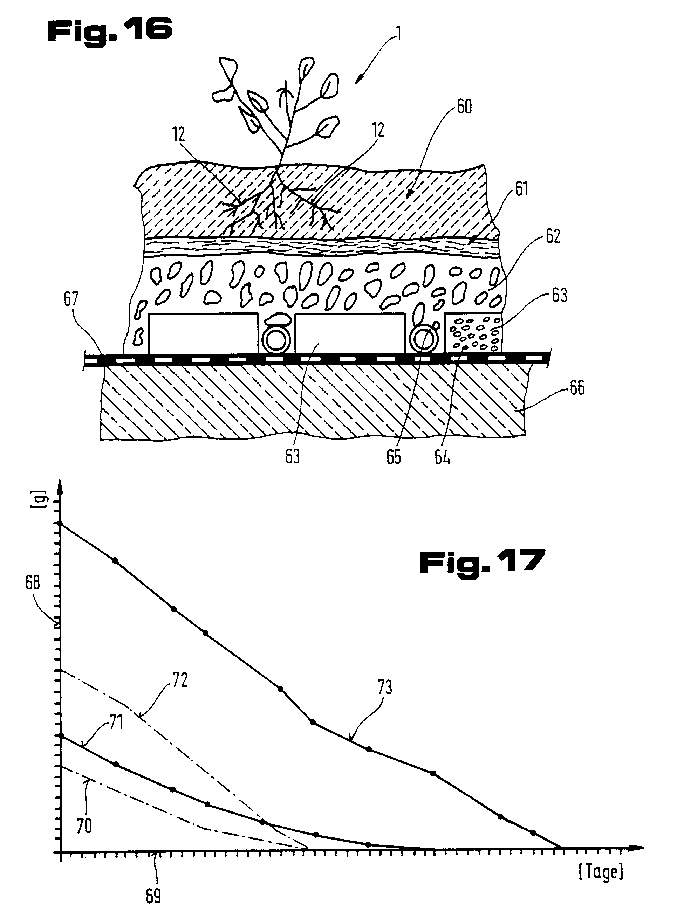

In Fig. 16 ist wiederum eine Pflanze 1 mit ihren Wurzeln 12 gezeigt, wobei die Wurzeln 12 in einem Pflanzmaterial 60 angeordnet ist. Dieses Pflanzmaterial 60 besteht beispielsweise aus Erde, welcher 7 % bis 10 % erfindungsgemäßer pulverförmiger Speichervorrichtung zugemischt ist, wie sie beispielsweise im Beispiel 6 der vorstehenden Beschreibung näher erläutert ist.

Dieses Pflanzmaterial 60 ist über eine Filterschicht 61, z.B. aus einem Polyesterspinnvlies von einer Dränschicht 62 aus splitthältiger Speichervorrichtung, wie sie im vorangehend beschriebenen Beispiel 2 näher erläutert ist, getrennt.

Diese Dränschicht ist auf Betonblöcken 63 aus einem wasserspeichenden Porenbeton, wie er beispielsweise anhand des Ausführungsbeispieles in Fig.8 beschrieben ist, angeordnet. Zwischen den einzelnen Betonblöcken 63 des Porenbetons 64 können Tropfschläuche 65 angeordnet sein. Zwischen diesen Tropschläuchen 65 und den Betonblöcken 63 und einer Betondecke 66 ist eine Dachdichtung 67, die gleichzeitig auch eine Wurzelschutzschicht bildet, angeordnet. Diese kann z.B. aus einer EDPM-Folie bestehen.

Der Vorteil dieser erfindungsgemäßen Ausbildung für eine begrünbare Dachterasse, insbesondere in Schüttbauweise besteht darin, daß das Niederschlagswasser aufgrund des erfindungsgemäßen Aufbaus optimal genutzt werden kann, d.h. das Rückhaltevermögen sehr groß ist. Etwaiges Überschußwasser rinnt neben den Tropfschläuchen auf die Dachdichtung ab oder kann auch mit einem Stauregler angestaut werden, wodurch der wasserspeichernde Beton maximal durchfeuchtet wird. Die Filterschicht 61 dient dazu, um ein etwaiges Ausschlemmen von körnigen Substratteilchen in die Dränschicht 62 bzw. in die Entwässerungsleitungen zu vermeiden.

Die Bauweise hat eine extrem hohe Wasserrückhaltekapazität, ohne daß die Wurzeln im Wasser sind. Dazu kommt, daß eine sehr gute Luftkapazität erhalten werden kann, weil oben alles trocken sein kann und daher wenig Vermoosung, Unkraut und Schädlingsbefall entsteht. Ein weiterer Vorteil dieser Lösung liegt darin, daß nur ein geringer Wasserverbrauch, der in langen Trockenperioden über die Tropfschläuche 65 zugeführt werden kann, benötigt wird, da hauptsächlich nur Regenwasser eingesetzt werden braucht. Darüber hinaus hat diese Bauweise ein verhältnismäßig geringes Gewicht, da die Wasseraufnahme im Verhältnis zur für die Wasseraufnahme benötigten Masse sehr gering ist. Darüber hinaus kann eine derartige Begrünung mit wenig Pflegearbeit erzielt werden, da nur selten ein Jäten, Gießen und ganz selten eine Düngung notwendig ist.

In Fig. 17 ist ein weiteres Diagramm gezeigt, in welchem auf der Ordinate 8 ein Wasservolumen in Gramm und auf der Abszisse 69 eine Trocknungszeit in Tagen aufgetragen ist. Eine Kurve 70 in strich-punktierten Linien zeigt, daß eine mit Torf vermischte Blumenerde, die in einem Gefäß mit 138 mm Durchmesser und 20 mm Höhe angeordnet ist, und somit ein Volumen von ca. 300 cm³ aufweist, maximal 86 Gramm Wasser aufnehmen kann. Aufgrund der geringen Höhe des Versuchsbehälters, welcher dadurch gewählt wurde, um einen gewissen Zeitraffereffekt zu erhalten, ist die mit Torf vermischte Blumenerde nach 23 Tagen ausgetrocknet. Betrachtet man demgegenüber ein erfindungsgemäß ausgebildetes Pflanzenmaterial, welches aus Splitt, von 2 mm bis 4 mm mit Hydrogel und Steinmehl vermischt ist, besteht, so kann ein derartiges Pflanzmaterial bereits 120 Gramm Wasser aufnehmen und ist erst nach 34 Tagen ausgetrocknet, wie dies die Kurve 71 zeigt. Weiters ist anhand einer in strich-punktierten Linien dargestellten Diagrammlinie 72 der Trocknungsvorgang bei Verwendung einer Steinwolle als Wasserspeicher gezeigt. Die Steinwolle kann bei dem vorangegebenem Volumen eine Wassermenge von in etwa 168 Gramm aufnehmen und ist aber bereits nach 23 Tagen ausgetrocknet.

Wird die Steinwolle dagegen als Trägermaterial einer erfindungsgemäßen Speichervorrichtung verwendet, so ist aus der Linie 73 in diesem Diagramm zu ersehen, daß eine derartige erfindungsgemäß ausgebildete Speichervorrichtung 312 Gramm Wasser speichern kann und erst nach 46 Tagen ausgetrocknet ist.

Aus diesen vorstehenden Gegenüberstellungen im Diagramm ist also bereits klar ersichtlich, daß die Verwendung einer erfindungsgemäßen Pflanzenschutzvorrichtung eine erhebliche Erhöhung der Wasserspeichermenge ermöglicht und überdies die Trockenzeit um 50 % bzw. 100 % über die Trockenzeit der Materialien ohne der erfindungsgemäßen Speichervorrichtung erhöht. Bei stärkeren Schichten als hier im Versuch und wie sie in der Praxis auftreten, verschiebt sich die Wasserspeicherzunahme und die Austrocknungszeit zu Gunsten der erfindungsgemäßen Speichervorrichtung.

Abschließend sei der Ordnung halber darauf hingewiesen, daß zum besseren Verständnis der Funktion der erfindungsgemäßen Speichervorrichtung für Flüssigkeiten viele Teile derselben schematisch und unproportional vergrößert dargestellt sind. Des weiteren können auch einzelne Ausbildungen einzelner Ausführungsbeispiele bzw. die Ausführungsbeispiele jeweils für sich eigenständige erfindungsgemäße Lösungen bilden.

| **Be zugszeichenaufstellung** | | | |
|---|---|---|---|
| 1 | Pflanze | 41 | Wasser |
| 2 | Wurzelstock | 42 | Stützgerüst |
| 3 | Speichervorrichtung | 43 | Block |
| 4 | Trägermaterial | 44 | Erde |
| 5 | Splittkorn | 45 | Pflanze |
| 6 | Gemisch | 46 | Behälter |
| 7 | Feuchtigkeitsabsorber | 47 | Wurzelstock |
| 8 | Wasser | 48 | Pflanzmaterial |
| 9 | Pfeil | 49 | Gemisch |
| 10 | Bereich | 50 | Boden |
| 11 | Hohlraum | 51 | Seinwollfaser |
| 12 | Wurzel | 52 | Höhe |
| 13 | Pfeil | 53 | Öffnung |
| 14 | Flüssigkeit | 54 | Öffnung |
| 15 | Pfeil | 55 | Erde |
| 16 | Schüssel | 56 | Vorratsbehälter |
| 17 | Oberseite | 57 | Gemisch |
| 18 | Sandkorn | 58 | Schicht |
| 19 | Bindemittel | 59 | Steinoberfläche |
| 20 | Schaumbildner | 60 | Pflanzmaterial |
| 21 | Zelle | 61 | Filterschicht |
| 22 | Oberfläche | 62 | Dränschicht |
| 23 | Stützgerüst | 63 | Betonblock |
| 24 | Düngemittel | 64 | Porenbeton |
| 25 | Gemisch | 65 | Tropfschlauch |
| 26 | Kristall | 66 | Betondecke |
| 27 | Gewirk | 67 | Dachdichtung |
| 28 | Sammelkorn | 68 | Ordinate |
| 29 | Abszisse | 69 | Abszisse |
| 30 | Ordinate | 70 | Kurve |
| 31 | Linie | 71 | Kurve |
| 32 | Kurve | 72 | Diagrammlinie |
| 33 | Kurve | 73 | Linie |
| 34 | Kurve | | |
| 35 | Kennlinie | | |
| 36 | Kennlinie | | |
| 37 | Zement | | |
| 38 | Sand | | |
| 39 | Zelle | | |
| 40 | Schicht | | |

## Patentansprüche

1. Speichervorrichtung für Flüssigkeiten, insbesondere Wasser,mit einem Trägermaterial (4) aus einem anorganischen korn- und bzw. oder faserförmigen und bzw. oder schaumförmigen Material und bzw. oder aus einem organischen korn- und bzw. oder faserförmigen und bzw. oder schaumförmigen Material, welches mit einem Feuchtigkeitsabsorber (7) überzogen ist, dadurch gekennzeichnet, daß der Feuchtigkeitsabsorber (7) aus einem Gemisch aus pulverförmigen, feuchtigkeitsabsorbierenden Polymer, Wasser und pulverförmigem, anorganischen, silikatischem Material, insbesondere Gesteinsmehl besteht.

2. Speichervorrichtung nach Anspruch 1, dadurch gekennzeichnet, daß das anorganische Material durch Sandkörner (18), Splitt, Zement (37), Bentonit, Gesteinsmehl, Bimskies, Lecca, Perlit, Vermiculite, Liapor, Steinwollfasern (51) gebildet ist.

3. Speichervorrichtung nach Anspruch 1 oder 2, dadurch gekennzeichnet, daß das organische Material durch Holzspäne, Torf, Zellulosefasern, Chemiefasern, Vliese, Matten, Polyurethanschaum oder dgl. gebildet ist.

4. Speichervorrichtung, dadurch gekennzeichnet, daß die Oberflächen von stabilen Tragkörpern, wie z.B. Betonoberflächen oder wie Körner, z.B. von Splitt, Schotter, Sand, Zement, Lecca, und bzw. oder wie Fasern, z.B. von Steinwolle, Torf, Vliese, Matten und bzw. oder wie von Schäumen mit der Speichervorrichtung nach den Ansprüchen 1 bis 3 überzogen sind.

5. Speichervorrichtung nach einem oder mehreren der Ansprüche 1 bis 4, dadurch gekennzeichnet, daß das Trägermaterial (4) durch mineralische Stoffe, insbesondere Silikate gebildet ist.

6. Speichervorrichtung nach einem oder mehreren der Ansprüche 1 bis 5, dadurch gekennzeichnet, daß das kornförmige Trägermaterial (4) z.B. ein Splitt eine Korngröße von 1 mm bis 8 mm, bevorzugt 2 mm bis 4 mm aufweist.

7. Speichervorrichtung nach einem oder mehreren der Ansprüche 1 bis 6, dadurch gekennzeichnet, daß das kornförmige Trägermaterial eine Korngröße von 0 mm bis 2 mm aufweist.

8. Speichervorrichtung nach einem oder mehreren der Ansprüche 1 bis 7, dadurch gekennzeichnet, daß dem Trägermaterial (4) und bzw. oder dem Feuchtigkeitsabsorber (7) ein anorganisches und bzw. oder organisches Düngemittel (24) zugemischt ist.

9. Speichervorrichtung nach Anspruch 8, dadurch gekennzeichnet, daß das Düngemittel (24) durch ein Pulver aus zumindest einem mineralischen Stoff, insbesondere Silikaten und einem mineralischen Stoffgemisch, insbesondere Silikatgemisch gebildet ist.

10. Speichervorrichtung nach Anspruch 9, dadurch gekennzeichnet, daß das Trägermaterial (4) und bzw. oder das Düngemittel (24) ein Steinmehl ist.

11. Speichervorrichtung nach Anspruch 9 oder 10, dadurch gekennzeichnet, daß das Düngemittel (24) bzw. Steinmehl aus einem Mineralgemisch von ca. 30 % Alkalifeldspat als Hauptgemengeteil, 20 - 30 % Plagioklas, 20 - 30 % Quarz, 15 - 20 % Biotit und 5 - 15 % Disthen, Granat und Silimanit besteht.

12. Speichervorrichtung nach einem der Ansprüche 9 bis 11, dadurch gekennzeichnet, daß das Düngemittel (24) Ammoniumstickstoff (NH₄-N) und Nitratstickstoff (NO₃-N) in etwa in einem Ausmaß von 0,5 - 2 bevorzugt 1,05 mg/kg und 1 - 5 bevorzugt 2,7 mg/kg enthält.

13. Speichervorrichtung nach einem oder mehreren der Ansprüche 9 bis 12, dadurch gekennzeichnet, daß das Düngemittel (24) in etwa 61 % SiO₂, 18 % Al₂0₃, 4,7 % Fe₂0₃, 9 % K₂0, 0,2 % CaO, 1,5 % MgO, 0,17 % P₂0₅, 0,1 % MnO₂ und 5,33 % Spurenelemente, unlösliche Sulfate und Kristallwasser enthält.

14. Speichervorrichtung nach Anspruch 8, dadurch gekennzeichnet, daß das Düngemittel (24) in flüssiger Form vorliegt, z.B. 28,5 % Asche und 71,5 % organischen Anteil, beinhaltend 4,9 % Gesamtstickstoff, 3,14 % Gesamtphosphor (P₂0₅), 14,57 % K₂O, 0,93 % CaO, 0,86 % MgO, 62,9 ppm Cu, 34,3 ppm Mn, 285,7 ppm Fe, 114,3 ppm Zn, 0,57 ppm Co, 1,14 ppm Mo, 74,3 ppm B.

15. Speichervorrichtung nach einem oder mehreren der Ansprüche 1 bis 14, dadurch gekennzeichnet, daß das Trägermaterial (4) mit dem Feuchtigkeitsabsorber (7) und gegebenenfalls dem Düngemittel (24) über Van der Waalsche-Kräfte verbunden ist.

16. Speichervorrichtung nach Anspruch 1, dadurch gekennzeichnet, daß das Polymer durch einen polymeren Kunststoff, insbesondere in Salzform gebildet ist.

17. Speichervorrichtung nach Anspruch 16, dadurch gekennzeichnet, daß ein Düngemittel nach Anspruch 8 dem pulverförmig polymeren Kunststoff zugesetzt ist.

18. Speichervorrichtung nach einem oder mehreren der Ansprüche 1 bis 17, dadurch gekennzeichnet, daß zum Überziehen von 1000 GewT Splitt als Trägermaterial (4) der Feuchtigkeitsabsorber 250 GewT aus 2 % des Polymers, insbesondere aus dem Propenamidepolymer, chemisch vernetzt mit einem divalenten Vinyl-Monomer und mit hydrophilen Gruppen, an die Kaliumionenionogen gebunden sind und 98 % Wasser sowie 100 GewT mineralisches Düngemittel in Pulverform und/oder eine Nährstofflösung aufweist.

19. Speichervorrichtung nach Anspruch 1, dadurch gekennzeichnet, daß das Polymer durch ein Natriumsalz eines schwach vernetzten Polymerisates wie Polyacrylamid oder auf Polyacrylsäurebasis gebildet ist.

20. Speichervorrichtung nach einem oder mehreren der Ansprüche 1 bis 19, dadurch gekennzeichnet, daß der Feuchtigkeitsabsorber und das Trägermaterial (4) gegebenenfalls mit dem Düngemittel (24) in einem Behälter aus flüssigkeitsdichtem Material über einen Teil seiner Höhe angeordnet ist und darüber ein Pflanzmaterial, beispielsweise eine Erde angeordnet ist und daß im Übergangsbereich zwischen dem Pflanzmaterial und dem Gemisch aus Trägermaterial und Feuchtigkeitsabsorber Öffnungen bzw. Durchbrüche in der Behälterwand angeordnet sind.

21. Speichervorrichtung nach einem oder mehreren der Ansprüche 1 bis 20, dadurch gekennzeichnet, daß in einem flüssigkeitsdichten Behälter der Feuchtigkeitsabsorber mit dem Trägermaterial (4) und gegebenenfalls mit dem Düngemittel (24) angeordnet ist und im Boden des Behälters Öffnungen bzw. Durchbrüche angeordnet sind.

22. Speichervorrichtung nach einem oder mehreren der Ansprüche 1 bis 21, dadurch gekennzeichnet, daß der Feuchtigkeitsabsorber mit dem Trägermaterial (4), z.B. Sand (38) und mit Zement (37) und ein Schaumbilder (20), insbesondere einem Porenbeton (64) als eine Auflagefläche für ein Pflanzmaterial (60), z.B. Erde (44) gegebenenfalls vermengt mit einem Feuchtigkeitsabsorber (7) und bzw. oder einem Düngemittel (24) dient.

23. Speichervorrichtung nach Anspruch 22, dadurch gekennzeichnet, daß der Feuchtigkeitsabsorber mit dem Trägermaterial (4), z.B. Sand (38) dem Zement (37) und einen Schaumbilder insbesondere ein daraus hergestellter Bauteil z.B. Pflanzkasten oder Blumentrog mit seiner vom Pflanzmaterial abgewendeten Oberfläche in einer Flüssigkeit (14) angeordnet ist.

24. Speichervorrichtung nach einem oder mehreren der Ansprüche 1 bis 23, dadurch gekennzeichnet, daß eine Wurzel insbesondere ein Wurzelstock (47) einer Pflanze (45) mit dem Feuchtigkeitsabsorber und gegebenenfalls Düngemittel (24) beschichtet ist.

25. Verfahren zur Herstellung einer Speichervorrichtung für Wasser bei der ein Trägermaterial mit einem Feuchtigkeitsabsorber vermischt ist, insbesondere nach einem der Ansprüche 1 bis 24, dadurch gekennzeichnet, daß das pulverförmige, feuchtigkeitsabsorbierende Polymer zuerst mit dem pulverförmigen, anorganischen silikatischen Material trocken vermischt und danach in Wasser eingemischt wird, worauf die Fasern und bzw. oder das Mehl und bzw. oder die Körner des Trägermaterials in das verflüssigte Gemisch eingemischt werden und danach dem Trägermaterial abwechselnd Feuchtigkeit entzogen und zu speichernde Flüssigkeit zugeführt wird.

26. Verfahren nach Anspruch 25, dadurch gekennzeichnet, daß das Trägermaterial und das Gemisch durch Zusatz eines Schaumbildners aufgeschäumt wird.

27. Verfahren nach Anspruch 26, dadurch gekennzeichnet, daß der Schaumbildner ein dem Gemisch zugesetztes flüssiges organisches polymeres schaumbildendes Material ist.

28. Verfahren nach einem oder mehreren der Ansprüche 26 oder 27, dadurch gekennzeichnet, daß als Schaum ein insbesondere überwiegend offenzelliger Kunststoffschaum verwendet wird.

29. Verfahren nach einem oder mehreren der Ansprüche 25 bis 28, dadurch gekennzeichnet, daß die Porengröße des Schaumes durch Einmischung von Luft oder die Zugabe von Treibmittel variiert wird.

30. Verfahren nach einem oder mehreren der Ansprüche 25 bis 29, dadurch gekennzeichnet, daß das Gemisch mit dem Trägermaterial in eine gewünschte Form verbracht und insbesondere unter Beibehaltung dieser Form Feuchtigkeit entzogen wird.

31. Verfahren nach einem oder mehreren der Ansprüche 25 bis 30, dadurch gekennzeichnet, daß dem Gemisch soviel Feuchtigkeit entzogen wird, daß die van der Waalschen Kräfte ausreichen, um das Trägermaterial in einer vorbestimmten Form zu halten.

## Claims

1. A storage device for liquids, in particular water, with a carrier material (4) of an inorganic granular and/or fibrous and/or foam material and/or of an organic granular and/or fibrous and/or foam material, which is covered with a moisture absorber (7), characterised in that the moisture absorber (7) consists of a mixture of pulverulent, moisture-absorbing polymer, water and pulverulent, inorganic, silicate material, in particular mineral powder.

2. A storage device according to Claim 1, characterised in that the inorganic material is formed by grains of sand (18), gravel, cement (37), bentonite, mineral powder, pumice grit, lecca, perlite, vermiculite, liapor, rock wool fibres (51).

3. A storage device according to Claim 1 or 2, characterised in that the organic material is formed by wood chips, peat, cellulose fibres, man-made fibres, fleeces, mats, polyurethane foam or the like.

4. A storage device characterised in that the surfaces of stable supporting bodies such as, e.g. concrete surfaces or such as grains, e.g. of gravel, ballast, sand, cement, lecca, and/or such as fibres, e.g. of rock wool, peat, fleeces, mats and/or such as foams are covered with the storage device according to Claims 1 to 3.

5. A storage device according to one or more of Claims 1 to 4, characterised in that the carrier material (4) is formed by mineral substances, in particular silicates.

6. A storage device according to one or more of Claims 1 to 5, characterised in that the granular carrier material (4), e.g. a fine gravel, has a grain size of 1 mm to 8 mm, preferably 2 mm to 4 mm.

7. A storage device according to one or more of Claims 1 to 6, characterised in that the granular carrier material has a grain size of 0 mm to 2 mm.

8. A storage device according to one or more of Claims 1 to 7, characterised in that an inorganic and/or organic fertilizer (24) is mixed with the carrier material (4) and/or with the moisture absorber (7).

9. A storage device according to Claim 8, characterised in that the fertilizer (24) is formed by a powder of at least one mineral substance, in particular silicates and a mineral substance mixture, in particular silicate mixture.

10. A storage device according to Claim 9, characterised in that the carrier material (4) and/or the fertilizer (24) is a mineral powder.

11. A storage device according to Claim 9 or 10, characterised in that the fertilizer (24) or the mineral powder consists of a mineral mixture of approximately 30% alkali feldspar as major constituent, 20 - 30% plagioclase, 20 - 30% quartz, 15 - 20% biotite and 5 - 15% disthene, garnet and silimanite.

12. A Storage device according to one of Claims 9 to 11, characterised in that the fertilizer (24) contains ammonium nitrogen (NH₄-N) and nitrate nitrogen (NO₃-N) approximately in an extent of 0.5 - 2 preferably 1.05 mg/kg and 1 - 5 preferably 2.7 mg/kg.

13. A Storage device according to one or more of Claims 9 to 12, characterised in that the fertilizer (24) contains approximately 61% SiO₂, 18% Al₂O₃, 4.7% Fe₂O₃, 9% K₂O, 0.2% CaO, 1.5% MgO, 0.17% P₂O₅, 0.1% MnO₂ and 5.33% trace elements, insoluble sulphates and water of crystallization.

14. A storage device according to Claim 8, characterised in that the fertilizer (24) is present in liquid form, e.g. 28.5% ash and 71.5% organic component, containing 4.9% total nitrogen, 3.14% total phosphorus (P₂O₅), 14.57% K₂O, 0.93% CaO, 0.86% MgO, 62.9 ppm Cu, 34.3 ppm Mn, 285.7 ppm Fe, 114.3 ppm Zn, 0.57 ppm Co, 1.14 ppm Mo, 74.3 ppm B.

15. A storage device according to one or more of Claims 1 to 14, characterised in that the carrier material (4) is connected with the moisture absorber (7) and if applicable with the fertilizer (24) by Van der Waals' forces.

16. A storage device according to Claim 1, characterised in that the polymer is formed by a polymeric synthetic material, in particular in salt form.

17. A storage device according to Claim 16, characterised in that a fertilizer according to Claim 8 is added to the pulverulent polymeric synthetic material.

18. A storage device according to one or more of Claims 1 to 17, characterised in that for covering 1000 parts by weight fine gravel as carrier material (4), the moisture absorber has 250 parts by weight of 2% of the polymer, in particular of the propene amide polymer, chemically cross-linked with a divalent vinyl monomer and with hydrophilic groups, to which potassium ions are bonded ionogenically and 98% water and also 100 parts by weight mineral fertilizer in powder form and/or a nutrient solution.

19. A storage device according to Claim 1, characterised in that the polymer is formed by a sodium salt of a weakly cross-linked polymeride such as polyacrylamide or based on polyacrylic acid.

20. A storage device according to one or more of Claims 1 to 19, characterised in that the moisture absorber and the carrier material (4) if applicable with the fertilizer (24) is arranged in a container of liquid-tight material over a part of its height, and thereabove a planting material, for example earth, is arranged, and that in the transition region between the planting material and the mixture of carrier material and moisture absorber, openings or perforations are arranged in the container wall.

21. A storage device according to one or more of Claims 1 to 20, characterised in that in a liquid-tight container the moisture absorber is arranged with the carrier material (4) and if applicable with the fertilizer (24), and openings or perforations are arranged in the base of the container.

22. A storage device according to one or more of Claims 1 to 21, characterised in that the moisture absorber with the carrier material (4), e.g. sand (38) and with cement (37) and a foamer (20), in particular porous concrete (64) serves as a support surface for a planting material (60), e.g. earth (44) if applicable mixed with a moisture absorber (7) and/or a fertilizer (24).

23. A storage device according to Claim 22, characterised in that the moisture absorber with the carrier material (4), e.g. sand (38), the cement (37) and a foamer, in particular a component produced therefrom. e.g. a plant box or flower trough is arranged with its surface facing away from the planting material in a liquid (14).

24. A storage device according to one or more of Claims 1 to 23, characterised in that a root, in particular a root stock (47) of a plant (45) is coated with the moisture absorber and if applicable fertilizer (24).

25. A method for the production of a storage device for water in which a carrier material is mixed with a moisture absorber, in particular according to one of Claims 1 to 24, characterised in that the pulverulent, moisture-absorbing polymer is firstly mixed dry with the pulverulent, inorganic silicate material and thereafter is mixed in water, after which the fibres and/or the powder and/or the grains of the carrier material are mixed into the liquefied mixture and thereafter moisture is withdrawn alternately from the carrier material and liquid which is to be stored is supplied.

26. A method according to Claim 25, characterised in that the carrier material and the mixture is foamed up through the addition of a foamer.

27. A method according to Claim 26, characterised in that the foamer is a liquid organic polymeric foam-forming material which is added to the mixture.

28. A method according to one or more of Claims 26 or 27, characterised in that as foam an in particular predominantly open-celled plastic foam is used.

29. A method according to one or more of Claims 25 to 28, characterised in that the pore size of the foam is varied by mixing in air or by adding propellant.

30. A method according to one or more of Claims 25 to 29, characterised in that the mixture is brought into a desired form with the carrier material and moisture is withdrawn in particular whilst maintaining this form.

31. A method according to one or more of Claims 25 to 30, characterised in that so much moisture is withdrawn from the mixture, that the van der Waals' forces are sufficient to keep the carrier material in a predetermined form.

## Revendications

1. Réserve pour liquides, en particulier pour l'eau, avec un matériau de support (4) en un matériau inorganique granulaire et/ou fibreux et/ou en mousse et/ou en un matériau organique granulaire et/ou fibreux et/ou en mousse, qui est recouvert d'un agent absorbant l'humidité (7), caractérisée en ce que l'agent absorbant l'humidité (7) est formé d'un mélange d'un polymère pulvérulent, absorbant l'humidité, d'eau et d'un matériau de silicate inorganique, pulvérulent, en particulier de la roche pulvérisée.

2. Réserve selon la revendication 1, caractérisée en ce que le matériau inorganique est formé de grains de sable (18), de gravillon, de ciment (37), de bentonite, de roche pulvérisée, de ponce, de Lecca, de perlite, de vermiculite, de Liapor, de fibre de laine minérale (51).

3. Réserve selon la revendication 1 ou la revendication 2, caractérisée en ce que le matériau organique est formé de copeaux de bois, de tourbe, de fibres cellulosiques, de fibres chimiques, de non-tissé, de nattes, de mousse de polyuréthane et analogues.

4. Réserve caractérisée en ce que les sur faces de corps stable de support comme, par exemple, les sur faces de béton ou comme des grains, par exemple de gravillon, de caillou, de sable, de ciment, de Lecca et/ou comme des fibres, par exemple de laine minérale, de tourbe, de non-tissé, de natte et analogues comme de mousse, sont recouvertes de la réserve selon les revendications 1 à 3.

5. Réserve selon l'une quelconque des revendicaitons 1 à 4, caractérisée en ce que le matériau de support (4) est formé d'une matière minérale, en particulier un silicate.

6. Réserve selon l'une quelconque des revendications 1 à 5, caractérisée en ce que le matériau granuleux de support (4), par exemple du gravillon, présente une grosseur du grain de 1 mm à 8 mm, avantageusement de 2 mm à 4 mm.

7. Réserve selon l'une quelconque des revendications 1 à 6, caractérisée en ce que le matériau granuleux de support présente une grosseur du grain de 0 mm à 2 mm.

8. Réserve selon l'une quelconque des revendications 1 à 7, caractérisée en ce qu'au matériau de support (4) et/ou à l'agent absorbant l'humidité (7) est mélangé un engrais inorganique et/ou organique (24).

9. Réserve selon la revendication 8, caractérisée en ce que l'engrais (24) est formé d'une poudre d'au moins une matière minérale , en particulier des silicates et d'un mélange de matières minérales, en particulier un mélange de silicates.

10. Réserve selon la revendication 9, caractérisée en ce que le matériau de support (4) et/ou l'engrais (24) est une poussière inerte.

11. Réserve selon la revendication 9 ou 10, caractérisée en ce que l'engrais (24) ou, respectivement, la poussière inerte, se compose d'un mélange minéral d'environ 30% d'ortoclase en tant que partie principale, de 20-30% de plagioclase, de 20-30% de quartz, de 15-20% de biotite, de 5-15% de cyanite, de grenat et de silimanite.

12. Réserve selon l'une quelconque des revendications 9 à 11, caractérisée en ce que l'engrais (24) contient de l'ammonium azoté (NH₄-N) et du nitrate azoté (NO₃-N) à raison d'environ 0,5-2 et, de préférence, 1,05 mg/kg et 1-5, de préférence 2,7 mg/kg.

13. Réserve selon l'une quelconque des revendications 9 à 12, caractérisée en ce que l'engrais (24) contient environ 61% de SiO₂, 18% de Al₂O₃, 4,7% de Fe₂O₃, 9% de K₂O, 0,2% de CaO, 1,5% de MgO, 0,17% de P₂O₅, 0,1% de MnO₂ et 5,33% de trace de sulfate insoluble et d'eau de cristallisation.

14. Réserve selon la revendication 8, caractérisée en ce que l'engrais (24) est sous forme liquide, par exemple 28,5% de cendres et 71,5% de matières organiques, comprenant 4,9% d'azote au total, 3,14% de phosphore au total (P₂O₅), 14,57% de K₂O, 0,93% de CaO, 0,86% de MgO, 62,9 ppm de Cu, 34,3 ppm de Mn, 285,7 ppm de Fe, 114,3 ppm de Zn, 0,57 ppm de Co, 1,14 ppm de Mo, 74,3 ppm de B.

15. Réserve selon l'une quelconque des revendications 1 à 14, caractérisée en ce que le matériau de support (4) est lié à l'agent absorbant l'humidité (7) et le cas échéant à l'engrais (24) par les forces de Van der Waalsch .

16. Réserve selon la revendication 1, caractérisée en ce que le polymère est formé d'une matière synthétique polymérique, en particulier sous forme de sel.

17. Réserve selon la revendication 16, caractérisée en ce qu'un engrais selon la revendication 8 est ajouté à la matière synthétique polymérique en poudre.

18. Réserve selon l une quelconque des revendications 1 à 17, caractérisée en ce que pour le revêtement de 1 000 parties en poids de gravillon en tant que matériel de support (4), l'agent absorbant l'humidité à 250 parties en poids est formé de 2% du polymère, en particulier du polymère de propénamide, chimiquement réticulé avec un monomère vinylique divalent et avec des groupes hydrophiles auxquels sont liés des ions de phosphore et 98% d'eau ainsi que 100 parties en poids d'un engrais minéral en forme de poudre et/ou d'une solution d'un aliment.

19. Réserve selon la revendication 1, caractérisée en ce que le polymère est formé d'un sel de sodium d'un polymérisat faiblement réticulé tel que le polyacrylamide ou à base d'acide polyacrylique.

20. Réserve selon l'une quelconque des revendications 1 à 19, caractérisée en ce que l'agent absorbant l'humidité et le matériau du support (4), le cas échéant avec l'engrais (24), sont placés dans un récipient d'un matériau imperméable aux liquides sur une partie de sa hauteur et par-dessus est placé un matériau pour les plantes, par exemple une terre et en ce que, dans la zone de transition entre le matériau pour les plantes et le mélange formé du matériau du support et de l'agent absorbant l'humidité, sont agencées des ouvertures ou, respectivement, des interruptions dans la paroi du récipient.

21. Réserve selon l'une quelconque des revendications 1 à 20, caractérisée en ce que, dans un récipient imperméable aux liquides, est placé l'agent absorbant l'humidité avec le matériau de support (4) et, le cas échéant, avec l'engrais (24) et en ce que des ouvertures ou, respectivement interruptions, soient agencées au fond du récipient.

22. Réserve selon l'une quelconque des revendications 1 à 21, caractérisée en ce que l'agent absorbant l'humidité avec le matériau de support (4), par exemple du sable (38) et avec du ciment (37) et un agent formant de la mousse (20), en particulier un béton poreux (64) sert de surface d'appui pour un matériau de plante (60) par exemple de la terre (44), le cas échéant, en mélange avec un agent absorbant l'humidité (7) et/ou un engrais (24).

23. Réserve selon la revendication 22, caractérisée en ce que l'agent absorbant l'humidité avec le matériau de support (4), par exemple du sable (38), le ciment (37) et un agent formant de la mous se, en particulier une pièce de construction qui en est formée par exemple des pièces pour les plantes ou des pots de fleurs, est placé, par sa sur face éloignée du matériau pour les plantes, dans un liquide (14).

24. Réserve selon l'une quelconque des revendications 1 à 23, caractérisée en ce qu'une racine et, en particulier, une souche (47) d'une plante (45) est enduite de l'agent absorbant l'humidité et, le cas échéant de l'engrais (24).

25. Procédé de production d'une réserve pour l'eau où un matériau de support avec un agent absorbant l'humidité est mélangé, en particulier selon l'une quelconque des revendications 1 à 24, caractérisé en ce que le polymère pulvérulent, absorbant l'humidité ,est d'abord mélangé à sec avec le matériau de silicate inorganique pulvérulent et ensuite est mélangé à l'eau ce par quoi les fibres et/ou la poudre et/ou les grains du matériau de support se trouvent mélangés dans le mélange liquéfié et ensuite on retire l'humidité du matériau de support et on lui amène un liquide pour l'alimenter.

26. Procédé selon la revendication 25, caractérisé en ce que le matériau de support et le mélange est gonflé par addition d'un agent moussant.

27. Procédé selon la revendication 26, caractérisé en ce que l'agent moussant est un matériau formant de la mousse d'un polymère organique liquide ajouté au mélange.

28. Procédé selon l'une quelconque des revendications 26 ou 27, caractérisé en ce qu'on utilise, en tant que mousse une mousse synthétique à alvéoles principalement ouvert.

29. Procédé selon l'une quelconque des revendications 25 à 28, caractérisé en ce que la grandeur des pores de la mousse est modifiée en y mélangeant de l'aie ou bien par addition d'un fluide gonflant.

30. Procédé selon l'une quelconque des revendications 25 à 29, caractérisé en ce que le mélange avec le matériau de support est mis à une forme souhaitée et, en particulier, en conservant cette forme, l'humidité est retirée.

31. Procédé selon l'une quelconque des revendications 25 à 30, caractérisé en ce qu'on prélève suffisamment d'humidité du mélange pour que les forces de Van der Waalsch suffisent pour maintenir le matériau de support à une forme prédéterminée.
